# EUROPEAN PATENT SPECIFICATION

(11) **EP 2 664 538 B1**
(45) Date of publication and mention of the grant of the patent: **15.08.2018**
(21) Application number: 13167496.2
(22) Date of filing: 13.05.2013
(51) Int. Cl.: B64C 25/22, F15B 15/16

(54) **Hydraulic strut assembly for semi-levered landing gear**
Hydraulische Strebenanordnung für einen halb angehobenen Landesteg
Ensemble amortisseur hydraulique pour train d'atterrissage semi-articulé

(30) Priority: 17.05.2012 US 201213474332
(43) Date of publication of application: 20.11.2013
(73) Proprietor: The Boeing Company, Chicago, IL 60606-1596 (US)
(72) Inventor: Lindahl, Gary M, Newcastle, WA Washington 98056 (US); Nelson, Eric Howard, Bothell, WA Washington 98011 (US); Mellor, Mitchell Loren Ray, Bothell, WA Washington 98011 (US)
(74) Representative: Boult Wade Tennant LLP

(56) References cited:
- EP-A2- 1 041 001
- FR-A1- 2 530 763
- US-A- 4 445 672

## Description

### BACKGROUND INFORMATION

### 1. Field:

Embodiments of the present disclosure relate generally to landing gear and, more particularly, to a semi-levered landing gear and an associated method of positioning the bogie beam of the landing gear using a telescopic hydraulic actuator.

### 2. Background:

Many airplanes include landing gear to facilitate takeoff, landing and taxi. The landing gear of some aircraft includes a shock absorber that is pivotally attached to a bogie beam at a distal or lower end thereof. The shock absorber may also be referred to as a shock strut. The bogie beam includes two or more axles upon which tires are mounted. In this regard, the bogie beam may include a forward axle positioned forward of the shock absorber and an aft axle positioned aft of the shock absorber. Upon takeoff, an airplane having a conventional landing gear with forward and aft axles will pivot about the pin that attaches the bogie beam to the shock absorber such that all of the landing gear tires have an equal load distribution.

In order to provide additional ground clearance for rotation of the aircraft during takeoff, semi-levered landing gear mechanisms have been developed. A semi-levered landing gear fixedly positions the shock absorber and the forward end of the bogie beam during takeoff such that the forward axle is in a raised position relative to the aft axle when the airplane has left the ground. As such, the aircraft pivots about the aft axle, rather than the pin that pivotally connects the bogie beam to the shock absorber, provided that the extend pressure of the shock absorber has been increased sufficiently. By rotating about the aft axle, the landing gear height is effectively increased so as to provide additional ground clearance for rotation of the aircraft during takeoff. As a result, the takeoff field length (TOFL) of the aircraft may be reduced, the thrust used by the engines may be reduced, or the weight carried by the aircraft may be increased while maintaining the same takeoff field length.

In order to provide for rotation of the aircraft about the aft axle during takeoff, a semi-levered landing gear locks the bogie beam in a "toes-up" attitude such that the tires mounted upon the aft axle support the aircraft, while the tires mounted upon the forward axle are raised above the surface of the runway. Following takeoff, the landing gear is generally stowed in a location such as a wheel well. In order to fit within a conventional wheel well, the landing gear is typically unlocked and the bogie beam repositioned in a "stowed" attitude prior to retracting the landing gear into the wheel well. Thereafter, during landing, the landing gear is lowered and the bogie beam is repositioned such that the forward axle is higher than the aft axle. Upon touch down, all of the wheels, including both those on the forward axle and the aft axle, equally bear the weight of the aircraft. Typically, the locking and unlocking of a semi-levered gear system, and the resulting repositioning of the bogie beam relative to the shock absorber, occurs without input from the pilot or the flight control system.

One type of semi-levered landing gear utilizes a mechanical linkage to lock the bogie beam during takeoff, but uses a separate mechanical linkage, termed a shrink-link, to reposition the shock absorber for retraction into the wheel well. The use of a shrink-link increases the complexity, expense and weight of the resulting semi-levered landing gear more than desired. Mechanical linkages also may not provide sufficiently desired damping during landing or bogie beam pitch dampening while on the ground.

Another type of semi-levered landing gear includes a locking hydraulic strut to lock the bogie beam in the desired orientation for takeoff. The locking hydraulic strut is essentially a locking actuator, but has a number of additional chambers and an internal floating piston. While a semi-levered landing gear having a locking hydraulic strut is suitable for some aircraft, the landing gear of other aircraft may not have sufficient clearance or room for the hydraulic strut to be positioned between the shock absorber and the bogie beam in an efficient manner.

Accordingly, it would be desirable to provide an improved semi-levered landing gear hydraulic actuator that may be used on landing gears that do not have sufficient space for housing a conventional locking hydraulic strut configuration. In particular, it would be desirable to provide a semi-levered landing gear that is both weight and cost efficient and that is not overly complex, while still satisfying the various operational requirements of the semi-levered landing gear.

EP1041001 (A2) discloses a semi-levered landing gear includes a main strut, a wheel truck pivotally attached at a main pivot to a lower end of the main strut and supporting forward and aft wheels, and an auxiliary strut attached at its upper end to the main strut and at its lower end to the wheel truck forward of the main pivot. The auxiliary strut includes a lock-up valve configured such that the strut locks up at an intermediate length between a minimum and a maximum length of the strut, so that on takeoff, as the main strut extends, the auxiliary strut locks up to cause the wheel truck to tilt into a nose-up attitude. In one embodiment, the lock-up valve is actuatable to move into either a retracted position providing a short extension before locking up, or an extended position enabling the auxiliary strut to extend a greater amount before locking up. The auxiliary strut is also actuatable to extend the main piston for stowing the landing gear and to retract the main piston for tilting the wheel truck on landing approach.

### SUMMARY

A hydraulic assembly comprises a housing, a first piston, a second piston, and a third piston. The housing comprises an outer cylindrical structure and an inner cylindrical structure. The first piston is positioned between the outer cylindrical structure and the inner cylindrical structure. An outer chamber is configured to receive a first fluid is formed between the outer cylindrical structure, the inner cylindrical structure, and the first piston. The second piston is nested within the first piston. The inner cylindrical structure, the first piston, and the second piston form an inner chamber in which a volume of the inner chamber changes when at least one of the first piston and the second piston move. The inner chamber is configured to hold a second fluid comprising a gas. The third piston is positioned between the outer cylindrical structure and the first piston. The first piston, the second piston and the third piston are configured to move in a direction parallel to an axis through the housing.

In another illustrative embodiment, a method for operating an aircraft to perform an alternate landing is present. The aircraft is operated to perform the alternate landing. An actuator in a landing gear assembly for the aircraft comprises a housing, a first piston, a second piston, and a third piston. The housing comprises an outer cylindrical structure and an inner cylindrical structure. The first piston is positioned between the outer cylindrical structure and the inner cylindrical structure. An outer chamber is configured to receive a first fluid that is formed between the outer cylindrical structure, the inner cylindrical structure, and the first piston. The second piston is nested within the first piston. The inner cylindrical structure, the first piston, and the second piston form an inner chamber in which a volume of the inner chamber changes when at least one of the first piston and the second piston move. The inner chamber is configured to hold a second fluid comprising a gas. The third piston is positioned between the outer cylindrical structure and the first piston. The first piston, the second piston and the third piston are configured to move in a direction parallel to an axis through the housing. The second piston and the first piston are retracted in response to a load being applied to the second piston when the landing gear assembly contacts a ground on which the aircraft is landing. The gas in the inner chamber compresses when the second piston retracts.

The features and functions can be achieved independently in various illustrative embodiments of the present disclosure or may be combined in yet other illustrative embodiments in which further details can be seen with reference to the following description and drawings.

### BRIEF DESCRIPTION OF THE DRAWINGS

The novel features believed characteristic of the illustrative embodiments of the invention are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in the form of a block diagram in accordance with an illustrative embodiment;
**Figure 2** is an illustration of a hydraulic actuator in accordance with an illustrative example not being part of the invention;
**Figure 3** is an illustration of a hydraulic actuator in a static position for an on-ground condition, in accordance with an illustrative example not being part of the invention;
**Figure 4** is an illustration of a hydraulic actuator in a lock-up position in accordance with an illustrative example not being part of the invention;
**Figure 5** is an illustration of a hydraulic actuator in a fully extended position for stowing in accordance with an illustrative example not being part of the invention;
**Figure 6** is an illustration of a landing gear assembly in a static position in accordance with an illustrative example not being part of the invention;
**Figure 7** is an illustration of a landing gear assembly in a stow position in accordance with an illustrative example not being part of the invention;
**Figure 8** is an illustration of a landing gear assembly in a landing position in accordance with an illustrative example not being part of the invention;
**Figure 9** is an illustration of a block diagram of an aircraft in accordance with an illustrative example not being part of the invention;
**Figure 10** is an illustration of a hydraulic strut assembly in the form of a block diagram in accordance with an illustrative embodiment;
**Figure 11** is an illustration of a cross-sectional view of a hydraulic strut assembly in accordance with an illustrative embodiment;
**Figure 12** is an illustration of an actuator in a compressed position in accordance with an illustrative embodiment;
**Figure 13** is an illustration of an actuator in a retracted position in accordance with an illustrative embodiment;
**Figure 14** is an illustration of an actuator in a fully extended position in accordance with an illustrative embodiment;
**Figure 15** is an illustration of a landing gear assembly with an actuator in a compressed position in accordance with an illustrative embodiment;
**Figure 16** is an illustration of a landing gear assembly with an actuator in a retracted position in accordance with an illustrative embodiment;
**Figure 17** is an illustration of a landing gear assembly with an actuator in a fully extended position in accordance with an illustrative embodiment;
**Figure 18** is an illustration of a flowchart of a method of operating a hydraulic actuator in an aircraft, in accordance with an illustrative embodiment;
**Figure 19** is an illustration of a process for operating a vehicle during an alternate landing in the form of a flowchart in accordance with an illustrative embodiment;
**Figure 20** is an illustration of an aircraft manufacturing and service method in accordance with an illustrative embodiment; and
**Figure 21** is an illustration of an aircraft in accordance with an illustrative embodiment.

### DETAILED DESCRIPTION

The present disclosure now will be described more fully hereinafter with reference to the accompanying drawings, in which preferred illustrative embodiments of the disclosure are shown. This disclosure may, however, be embodied in many different forms and should not be construed as limited to the illustrative embodiments set forth herein; rather, these illustrative embodiments are provided so that this disclosure will be thorough and complete, and will fully convey the scope of the disclosure to those skilled in the art. Like numbers refer to like elements throughout.

The illustrative embodiments recognize these issues and present a solution that is flexible, durable, relatively inexpensive compared to other struts, and lightweight. Additionally, the illustrative embodiments have added further value to aircraft operation in that the illustrative embodiments aid an aircraft in both landing and lift off. The illustrative embodiments aid an aircraft to lift off by increasing the angle of attack of the aircraft. The angle of attack is the angle at which an aircraft is attempting to lift off from the ground into the air. The illustrative embodiments aid an aircraft to land by providing additional bogie beam pitch dampening. Other illustrative embodiments are apparent from the following additional description.

Specifically, illustrative embodiments of the present disclosure relate generally to landing gear assemblies and, more particularly, to a semi-levered landing gear assembly and an associated method of positioning the bogie beam of the landing gear assembly using a telescopic actuator. However, the illustrative embodiments may also apply to other vehicles and may be used in other applications aside from vehicles. Thus, the illustrative embodiments are not limited to use in landing gears or landing gear assemblies.

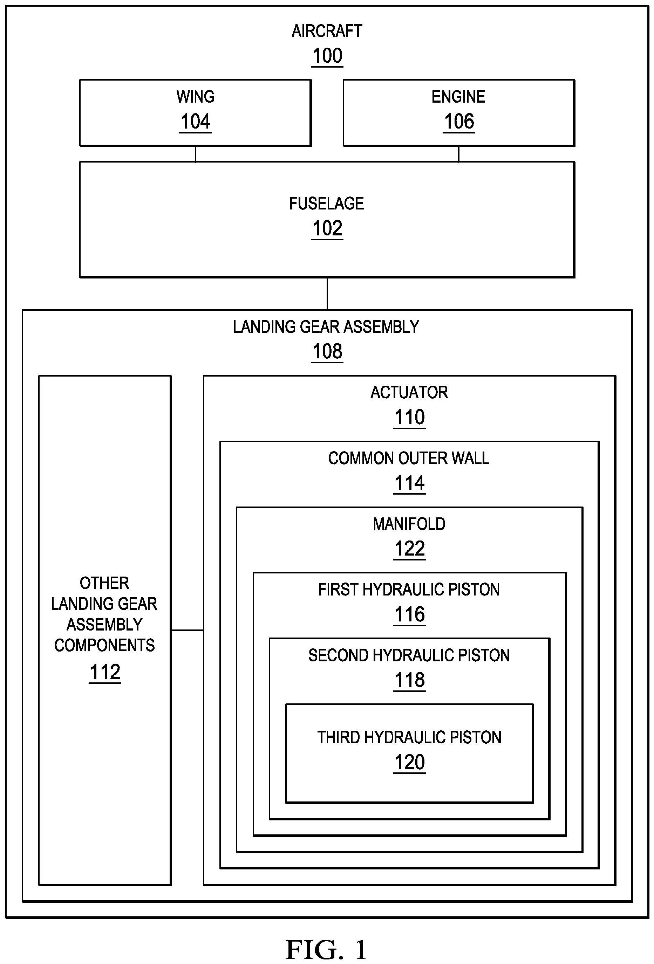

**Figure 1** is an illustration of a block diagram of an aircraft in which an illustrative embodiment may be implemented. While **Figure 1** may be used to describe an aircraft incorporating the illustrative embodiments, aircraft **100** may also potentially be any other vehicle in which a hydraulic strut or hydraulic piston might be used.

Aircraft **100** includes fuselage **102,** which is connected to wing **104.** In a non-limiting illustrative embodiment, aircraft **100** may include engine **106.** In another illustrative embodiment, landing gear assembly **108** may be connected to one of wing **104** or fuselage **102,** or even possibly engine **106,** or possibly combinations thereof. Aircraft **100** may include many other components. In an illustrative embodiment, landing gear assembly **108** may include actuator **110** and other landing gear assembly components **112.**

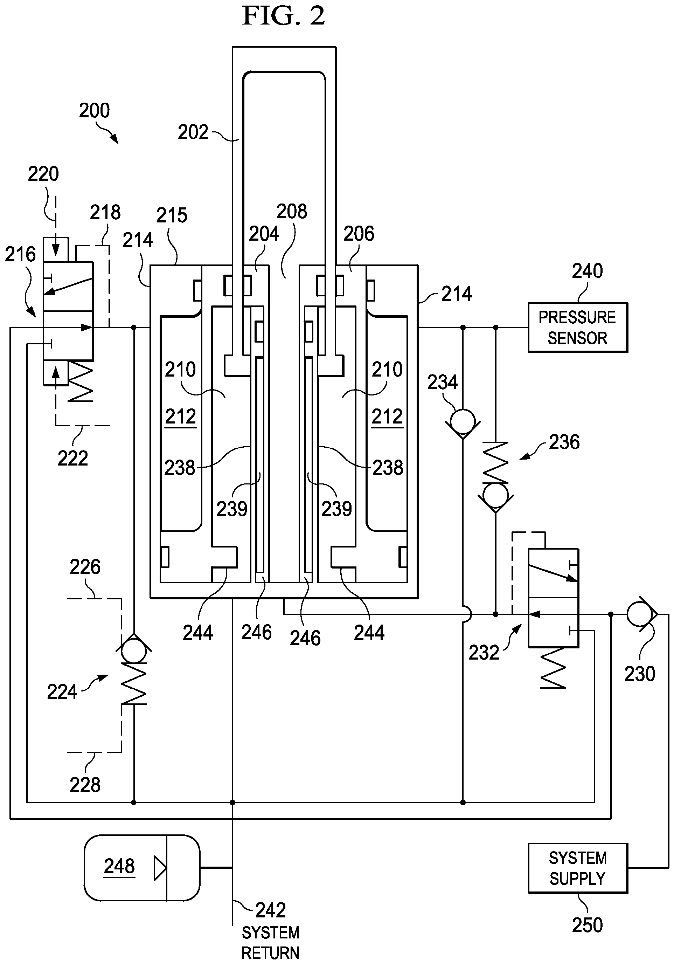

In illustrative examples relating to the invention, but not necessarily falling within the scope of the claims, actuator **110** may include a nested series of hydraulic pistons sharing common outer wall **114.** Thus, for example, actuator **110** may include first hydraulic piston **116,** second hydraulic piston **118,** and third hydraulic piston **120.** In an illustrative embodiment, the three hydraulic pistons are concentric. In an illustrative example, the three hydraulic pistons may actuate in a telescopic manner such that, when fully extended, second hydraulic piston **118** extends past a top of the third hydraulic piston **120,** and second hydraulic piston **118** extends past a top of first hydraulic piston **116.** Actuator **110** also includes manifold **122.** Manifold **122** may be contained within common outer wall **114;** however, manifold **122** may be connected in some other way to the first, second, and third hydraulic pistons. In any case, manifold **122** is disposed relative to the first, second, and third hydraulic pistons (**116, 118,** and **120**) such that a fluid moving in manifold **122** can control positions of the first, second, and third hydraulic pistons (**116, 118,** and **120**). Examples of such a fluid flow are detailed below with respect to **Figures 2** through **5****.**

Other arrangements are also possible. In other illustrative examples, one or more of the hydraulic pistons might be replaced by some other kind of piston, such as an electromechanical piston.

In an illustrative example, at least two of the first, second, and third hydraulic pistons may share a common fluid source. In other illustrative examples, all three hydraulic pistons share a common fluid source. In an illustrative example, more or fewer hydraulic pistons may be present. Thus, for example, four or more nested hydraulic pistons might be provided, though in another illustrative example only two nested hydraulic pistons might be provided.

In an illustrative example, the different hydraulic pistons might have different operating pressures. Thus, for example, third hydraulic piston **120** might maintain a constant pressure having a first value, whereas the second hydraulic piston **118** might maintain a constant return pressure having a second value different than or the same as the first value. However, pressures may vary; for example, the first hydraulic piston **116** might be configured to operate at variable pressures between third and fourth values different than the first and second values. Other combinations of operating pressures are possible.

The illustration of aircraft **100** in **Figure 1** is not meant to imply physical or architectural limitations to the manner in which different illustrative examples may be implemented. Other components in addition to and/or in place of the ones illustrated may be used. Some components may be unnecessary in some illustrative examples. Also, the blocks are presented to illustrate some functional components. One or more of these blocks may be combined and/or divided into different blocks when implemented in different illustrative examples.

**Figure 2** is an illustration of a hydraulic actuator, in accordance with an illustrative example not being part of the invention. Hydraulic actuator assembly **200** shown in **Figure 2** may be actuator **110** shown in **Figure 1****.** Likewise, other components may correspond between **Figure 1** and **Figure 2****.**

For example, first piston **206** may correspond to first hydraulic piston **116,** second piston **202** may correspond to second hydraulic piston **118,** third piston **204** may correspond to third hydraulic piston **120,** and common outer wall **214** may correspond to common outer wall **114.** Hydraulic actuator assembly **200** may also be referred to as a telescopic hydraulic strut assembly in some illustrative examples.

In the illustrative example shown in **Figure 2****,** first piston **206,** second piston **202,** and third piston **204** are concentric to each other. Each hydraulic piston has a corresponding pressure chamber. Thus, for example, second piston **202** and third piston **204** share chamber **208,** and first piston **206** has chamber **210.** The space between common outer wall **214** and first piston **206** define chamber **212.** These chambers may operate at the same or different pressures, variable pressures, or a combination of constant and variable pressures, all of which may be the same or different.

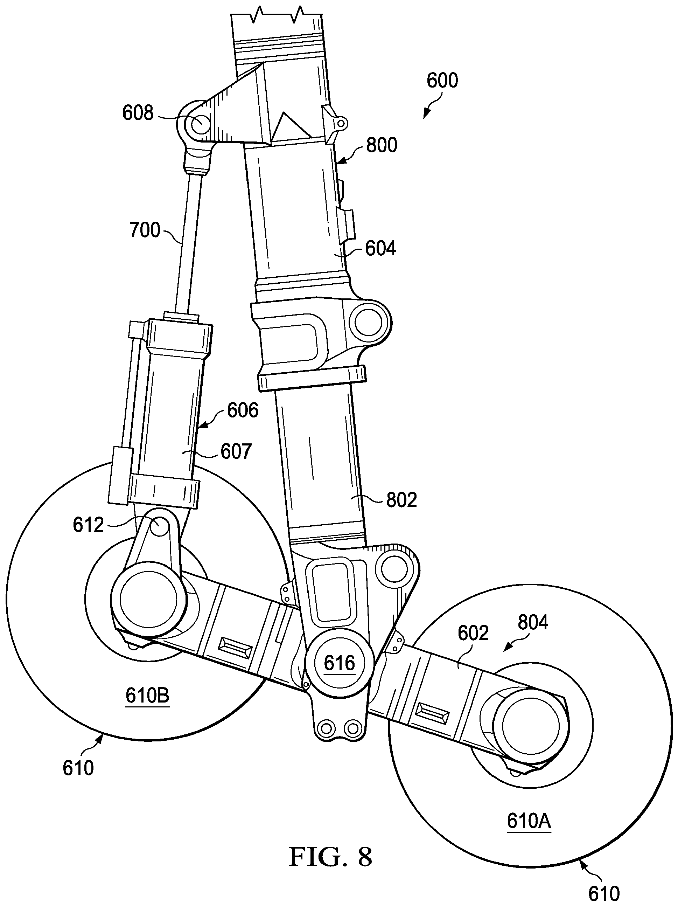

In a non-limiting illustrative example, the purpose of hydraulic actuator assembly **200** is to act as a fixed length tension member during takeoff, as shown in **Figure 8****.** In this configuration, hydraulic actuator assembly **200** may be referred to as a hydraulic strut. During takeoff roll, the load on the landing gear assembly is reduced as the wings generate lift. The reduced load on the landing gear shock absorber **604** may cause the lower portion **802** of the shock absorber **604** to extend such that the bogie beam **602** is forced to pivot about upper lug pivot **612** rather than about the main pivot **616** so as to provide a semi-levered function to the landing gear assembly **600.** As a result, the aircraft may experience a greater ground clearance, which in turn allows the airplane to rotate to a greater angle of attack on takeoff.

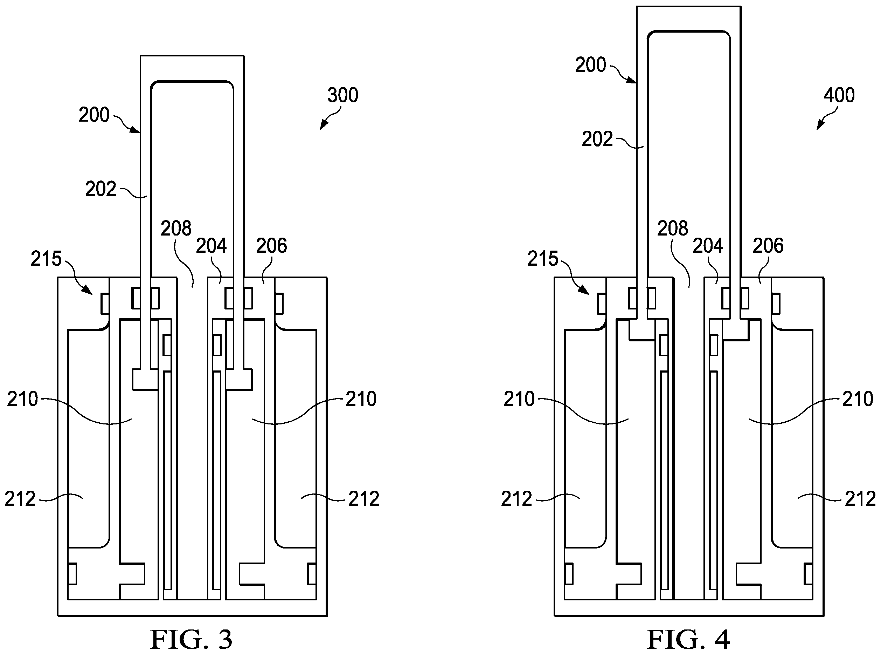

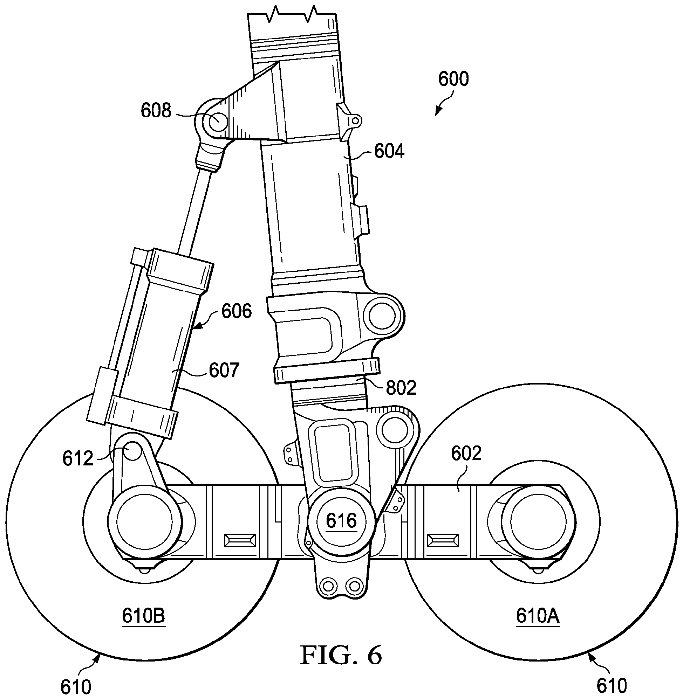

In a non-limiting illustrative example, to perform the semi-levered function of a hydraulic actuator, chamber **212** is filled with fluid to an illustrative pressure greater than the fluid pressure in chamber **210.** This result is shown in **Figures 3** and 4 showing examples not being part of the invention. The greater fluid pressure in chamber **212** causes the first piston **206** to be fully retracted inside the cylinder barrel **215.** **Figure 3** shows the on-ground configuration where the first piston **206** is fully retracted, but the second piston **202** and the third piston **204** may move, allowing fluid to pass in and out of chambers **210** and **208.** This movement of fluid in and out of chambers **210** and **208** provides dampening, which is an illustrative function to resist bogie beam pitch about main pivot **616** of **Figures 6** through **8****.**

During takeoff roll, the load on the landing gear assembly is reduced as the wings generate lift. The reduced load on the landing gear shock absorber causes the lower portion of the shock absorber **604** to extend. The extending motion of the shock absorber causes the hydraulic actuator assembly **200** to extend to the position shown in **Figure 4****.** In this position, the second piston **202** is pulled against stops on the end of first piston **206.** This position achieves the semi-lever functionality of the hydraulic actuator and landing gear assembly.

Referring to **Figure 3** in conjunction with the above description of **Figure 2****,** in this illustrative example, the hydraulic actuator assembly **200** passively transitions from position **300** to position **400** in response to the loads applied to the aircraft and landing gear assembly. This transition may not require any input from the pilots, crew, or any other mechanical or electrical device to achieve this desirable functionality. This passive operation reduces mechanical and hydraulic complexity and increases reliability.

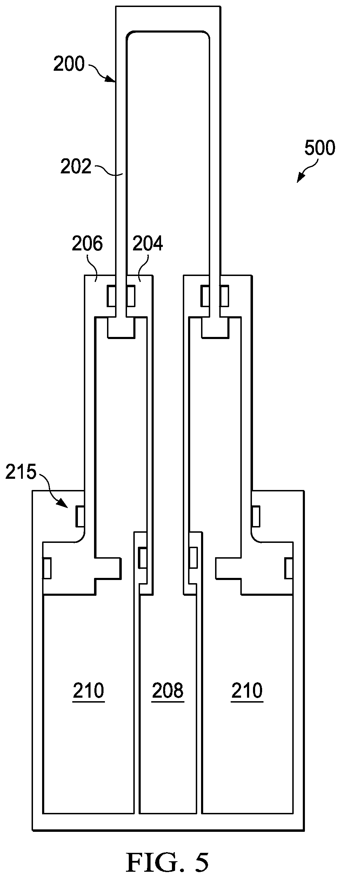

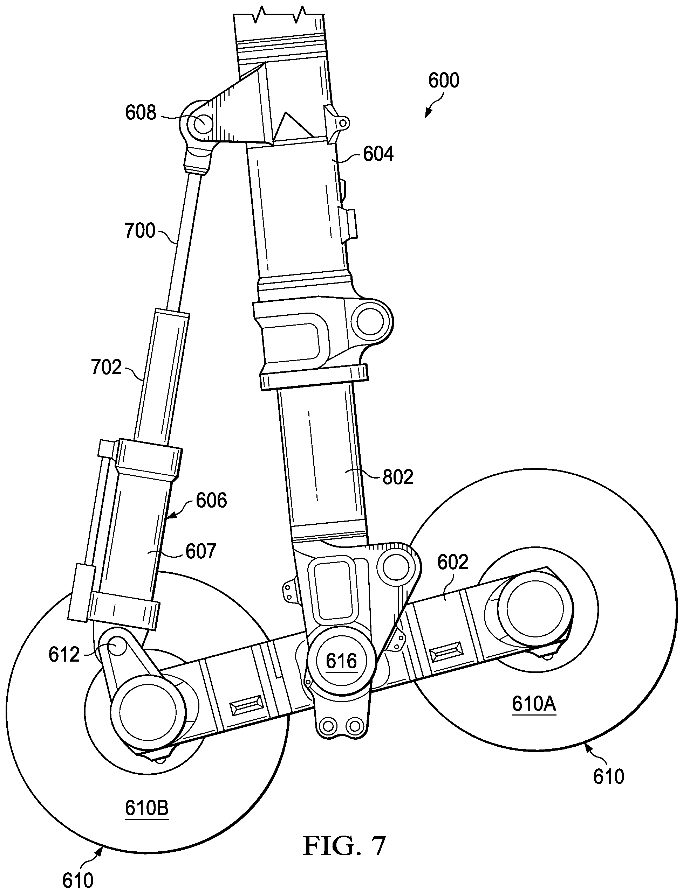

Hydraulic actuator assembly **200** may have other functions. For example, hydraulic actuator assembly **200** may aid in positioning the bogie beam **602** of **Figures 6** through **8****,** to different positions of varying lengths, such as stow or landing positions. In typical large aircraft configurations, it is beneficial to position the bogie beam **602** of **Figure 7** in an attitude where the forward axle is lower than the aft axle for storage in a wheel well. In this instance, the hydraulic actuator assembly **200** can be lengthened to position **500** as shown in **Figure 5****.** This position is achieved by decreasing the fluid pressure in chamber **212,** which allows the pressure in chamber **208** to extend the hydraulic actuator assembly **200.** In this manner, passages in the manifold allow the fluid in chamber **212** to exit the chamber. In some instances it may be beneficial to integrate the command to assume position **500** with the landing gear assembly retraction command such that the hydraulic actuator commands position **500** automatically when the pilot commands the landing gear assembly to be retracted.

Hydraulic actuator assembly **200** may allow for extension during landing touchdown to allow a change in bogie beam pitch to facilitate air-ground sensing. In particular, hydraulic actuator assembly **200** may allow for extension during landing touchdown to allow a change in bogie beam pitch to provide even tire loading. Hydraulic actuator assembly **200** may provide damping during landing to limit loads into the other parts of the aircraft. Hydraulic actuator assembly **200** may provide bogie beam pitch damping, as shown further in **Figure 6****.**

Returning to **Figure 2****,** the second piston **202** may operate with a constant pressure, such as about 14MPa (2000 pounds per square inch (psi)) in one non-limiting illustrative example (possibly more or fewer psi) by pressuring the fluid in chamber **208** accordingly. The constant pressure may be selected to provide sufficient force to position a bogie beam to stow, while not producing excessive force while on the ground, which could undesirably load the tires.

In an illustrative example, the third piston **204** may maintain a constant downward force due to pressure in chamber **208** being greater than chamber **210.** This force may reduce the extend forces and reduce the areas that experience system pressure.

In an illustrative example, the first piston **206** may operate at variable pressures by varying the pressure of the fluid in chamber **212.** The pressure in chamber **212** may be varied depending on the mode of operation of the hydraulic actuator assembly **200.** For example, a relatively low pressure of about 3.5 MPa (500 psi) may be used in chamber **212** for landing to allow the bogie beam to move for air-ground sensing, though higher or lower pressure might be used for this purpose depending on the aircraft and design considerations. On the other hand, chamber **212** may operate at about 21 MPa to 35 MPa (3000 to about 5000 psi), or greater, in order to lock the hydraulic actuator assembly **200.** In this case, the hydraulic actuator assembly **200** may act as a tension member during lift off rotation of the aircraft. Later, a reduced pressure of system return in chamber **212** may cause the strut to telescopically extend the nested hydraulic pistons **206, 204,** and **202** while bringing the strut and bogie beam to a stow position.

In an illustrative example, the second piston **202** may be referred to as a main piston, the first piston **206** may be referred to as a telescopic piston, and the third piston **204** may be referred to as a floating piston. In an illustrative example, third piston **204** and guide tube **238** may define chamber **239,** which is common with chamber **208** and which may greatly reduce the hydraulic flow used to reposition the hydraulic actuator assembly **200.** As a result, the time used to extend the hydraulic actuator assembly **200** for stowing in the wheel well may be illustratively reduced since the flow into chamber **208** from system supply **250** is much less than if chamber **210** had to be filled using system supply **250.**

Attention is now turned to pressure ranges with respect to hydraulic actuator assembly **200.** In the illustrative example shown, pressure ranges are for a system operating between about 3.5 MPa and 35 MPa (500 psi and 5000 psi), though other ranges might be suitable and could vary by as much as about 0 to 70 MPa (0 psi to about 10,000 psi) or more. These pressures are approximate and may vary with each specific operation or implementation. Seals are not shown, but conventional seals may be used in each groove shown in hydraulic actuator assembly **200.**

In an illustrative example, multi-mode reducer **216** may provide three outlet pressures using a single valve, as shown. These pressures might be 0 MPa, 3.5 MPa, 35 MPa (0 psi, 500 psi, and 5000 psi), as indicated at dashed sensing line **218.** The single valve may provide three outlet pressures by using a standard pressure reducer and adding solenoid valve input **220** and solenoid valve input **222** to either end as shown. Solenoid valve input **220** and solenoid valve input **222** may be actuated to drive the valve to be fully on or fully off. When solenoid valve input **220** is on, then the pressure may be about 0 MPa (0 psi). When solenoid valve input **222** is on, then the pressure may be about 35 MPa (5000 psi). When both solenoid valve input **220** and solenoid valve input **222** are off, multi-mode reducer **216** may perform as a normal reducer, outputting about 3.5 MPa (500 psi) in this example. The about 3.5 MPa (500 psi) may be low enough to hold the bogie beam in a landing attitude but still allow the bogie beam to move at touchdown, allowing the aircraft to use initial bogie beam motion to trigger landing spoilers. In particular, pressure of about 3.5 MPa (500 psi) may be low enough to hold the bogie beam in a landing attitude but still allow the bogie beam to move at touchdown, allowing the tires to be evenly loaded when the aircraft contacts the ground.

Multi-mode relief valve **224** may be an adaptation of a common relief valve with solenoid valve inputs, which may be the same valve inputs used in multi-mode reducer **216.** Thus, for example, solenoid valve input **226** may cause the relief valve to be opened, for use in the stow position, and solenoid valve input **228** may be used to put the relief valve into its high pressure setting. The solenoid valve input **228** may increase the cracking pressure from about 7 MPa to about 38 MPa(1000 psi to about 5500 psi) by increasing the spring pre-load. A use for the multi-mode relief valve **224** may be to provide touchdown damping in order to reduce loads in the fuselage and other parts of the airframe, which saves weight. During touchdown, the first piston **206** and the second piston **202** may be pulled out rapidly. Fluid from the rod end of chamber **212** may exit through the multi-mode relief valve **224,** which may be sized to provide the proper damping rate.

A pressure sensor **240** may be used to verify that the hydraulic actuator assembly **200** is locked. If the pressure sensor senses that pressure is near maximum system pressure, then the hydraulic actuator assembly **200** may react to the full tension load expected during takeoff with a semi-levered landing gear. Note that if the seals are damaged, full pressure would not be achieved and/or sensed by pressure sensor **240,** thereby providing an illustrative method of testing the integrity of the hydraulic actuator assembly **200.**

Check valve **230** may be a check valve that may trap fluid in hydraulic actuator assembly **200** in order to hold the hydraulic actuator assembly **200** in the fully extended position. In an illustrative example, the hydraulic pressure may be removed from system supply **250** after the landing gear is retracted, and check valve **230** also holds the bogie beam in position while the landing gear is tucked into the wheel well.

Reducer **232** may provide reduced pressure to the chamber **208.** This reduced pressure may be selected so as to avoid overloading the front tires while the aircraft is on the ground, but being sufficient pressure to power the actuator to the fully extended position when gear up is selected. A possible alternative illustrative example may be to provide a solenoid input to reducer **232** in order to shut reducer **232** off while the aircraft is on the ground. In this illustrative example, the tires may be equally loaded.

Check valve **234** may be used in an alternate extension case, such as where the landing gear assembly is extended by alternate means after hydraulic system loss. This use may leave the hydraulic actuator assembly **200** fully extended so that the aircraft may land with front tires down. This landing procedure may cause a rapid compression of the hydraulic actuator assembly **200.** The second piston **202** may move first, which may force fluid out of chamber **210** and back towards reducer **232.** In this case, the fluid in chamber **208** may also flow to system return **242.** In an illustrative example, accumulator **248** may be provided for surge suppression.

In any case, relief valve **236** may allow the fluid in chamber **208** to flow into chamber **212,** forcing the first piston **206** down. This action starts the first piston **206** moving before the second piston **202** reaches the first piston **206,** which reduces impact loads. If the fluid flow from chamber **210** exceeds the return line capacity, then that flow may flow through the check valve **234** to chamber **212,** further aiding the motion of the first piston **206.** When the second piston **202** reaches the first piston **206,** the second piston **202** may contact stop **244.**

In an illustrative example, the third piston **204** may be contained within the second piston **202,** in which case, guide tube **238** may extend from the head end of cylinder barrel **215.** In this case, the third piston **204** may have a stop **246** that prevents the third piston **204** from departing from guide tube **238** if the third piston **204** attempts to over-extend.

Thus, **Figure 2** depicts one illustrative example of hydraulic strut **606** of **Figures 6** through **8** in greater detail. Hydraulic actuator assembly **200** includes a cylinder barrel **215,** a first piston **206** slidably received through an open end of the cylinder barrel **215,** and second piston **202** slidably received through an open end of first piston **206.** The second piston **202** may include at least one lug or other connecting member at its upper end for attachment to the landing gear assembly upper half, as shown in **Figures 6** through **8****.** The cylinder barrel **215** may include at least one lug or other connecting member at its lower end for attachment to bogie beam **602** at upper lug pivot **612,** both of **Figures 6** through **8****.** The cylinder barrel **215** also contains a guide tube **238** that is fixed to the cylinder barrel **215.** A floating piston, third piston **204,** is contained within the second piston **202** and the guide tube **238.** The upper end of cylinder barrel **215** sealingly engages with the outer surface of first piston **206.** The lower end of the first piston **206** sealingly engages with the inner surface of the cylinder barrel **215.**

The cylinder barrel **215** includes fluid passages as shown in **Figure 2** to supply chambers **212, 210,** and **208** with pressurized fluid. These passages and chambers constitute a manifold contained within the common outer wall, the manifold is disposed relative to the first, second, and third hydraulic pistons such that a fluid moving in the manifold can control positions of the first, second, and third hydraulic pistons. The features of the hydraulic manifold shown in **Figure** 2 allow the pressures in chamber **212** to be changed such that the first piston **206** may be forced in or out of the cylinder barrel **215** in a desirable manner. Note that the manifold may take other forms. For example, the manifold may be a series of possibly different (more or fewer than those shown) chambers connected in some other way to the first, second, and third hydraulic pistons. In any case, the manifold is disposed relative to the first, second, and third hydraulic pistons such that a fluid moving in the manifold can control positions of the first, second, and third hydraulic pistons.

The upper end inside surface of first piston **206** sealingly engages with the outer surface of the second piston **202.** The inside surface of second piston **202** sealingly engages with the upper outside surface of third piston **204.** The upper end inside surface of the guide tube **238** sealingly engages with the outer surface of the third piston **204.** The cylinder barrel **215** includes fluid passages as shown in **Figure 2** to supply chambers **208, 210,** and **212** with pressurized fluid. The features of the hydraulic actuator assembly **200** shown in **Figure 2** allow the pressures in chambers **208** and **212** to be changed such that the second piston may be forced out of the first piston **206** in a desirable manner and both second piston **202** and third piston **204** can be extended together.

As implied above, the nested pistons shown in hydraulic actuator assembly **200** may have different arrangements to achieve different functions. Furthermore, different valves, reducers, and other hydraulic components may be arranged to change how hydraulic fluids flow within the various fluid chambers of hydraulic actuator assembly **200,** again to achieve different functions. Thus, the illustrative examples are not limited by the particular arrangements described with respect to **Figure 2****.**

**Figure 3** through **Figure 5** are illustrations of a hydraulic actuator in use, in accordance with an illustrative example not being part of the invention. The illustrative examples shown in **Figure 3** through **Figure 5** correspond to the hydraulic actuator assembly **200** shown in **Figure 2****.** Therefore, reference numerals in **Figure 3** through **Figure 5** sharing the same value as the reference numerals in **Figure 2** may correspond to the same components and may have similar structure and functions. Not all components described with respect to **Figure 2** are necessarily shown with respect to **Figures 3** through **5****;** however, all such components may be present in some illustrative examples.

The illustrative examples shown in **Figure 3** through **Figure 5** show hydraulic actuator assembly **200** in use. In **Figure 3****,** the hydraulic actuator assembly **200** has a position **300** for use while the aircraft is on the ground. In **Figure 4****,** the hydraulic actuator assembly **200** has a position **400.** In **Figure 5****,** the hydraulic actuator assembly **200** has a position **500.**

In the illustrative example shown in position **300,** the chamber **208** may have a pressure of about 7 MPa (2000 psi), but that value may be more or less. The chamber **210** is at the return pressure, which may be a constant pressure of about 0.35 MPa (50 psi). The chamber **212** may have a pressure of about 3.5 MPa (500 psi). In this arrangement, third piston **204** and first piston **206** are held down by pressure in chambers **208** and **212.** Second piston **202** slides axially as the bogie beam moves.

This position **300** of hydraulic actuator assembly **200** may be beneficial when the airplane is on the ground. The position may be beneficial because the hydraulic actuator assembly **200** allows for normal bogie beam pitch motion without excessive loads in the hydraulic actuator. Furthermore, the hydraulic actuator may be arranged so as to avoid impact against a lockup position to avoid overloading the front tires. Additionally, the hydraulic actuator may be short enough to prevent overload of the hydraulic actuator in the event of an unexpected condition such as one or more tires on the aft landing gear axles experiencing lowered air pressure.

In position **400,** the pressure in chamber **208** and chamber **210** is maintained, but the pressure in chamber **212** may be increased so as to restrain first piston **206** in a fully compressed position. Position **400** is illustrative during takeoff. Position **400** is beneficial on takeoff because hydraulic actuator assembly **200** has a fixed length, which has the effect of pulling up on the front of the bogie beam as the landing gear shock absorber pushes down, which causes the rear tires to be forced down. As a result, the effective length of the landing gear assembly is longer at the point of rotation, which allows the airplane to rotate to a higher angle of attack.

During landing, position **400** causes hydraulic actuator assembly **200** to see an initial tension load. In this manner, position **400** may act as a damper during initial touchdown as fluid is forced out of chamber **212.**

In position **500,** the pressure in chamber **212** is removed so that the pressure in chamber **208** will fully extend second piston **202.** The extension of second piston **202** will pull third piston **204** to its full extended position. As a result, hydraulic actuator assembly **200** reaches maximum telescopic extension of each of the three hydraulic pistons such that the top of second piston **202** extends past the top of third piston **204.** Position **500** is illustrative because this position orients the bogie beam in the desirable attitude to fit inside the wheel well. No supply pressure is present and no single issue or change in the hydraulic actuator assembly configuration can cause large retraction forces.

**Figures 6** through **8** illustrate a landing gear assembly in three different positions in several illustrative examples not being part of the invention. **Figure 6** illustrates a landing gear assembly **600** in the ground position; **Figure 7** illustrates landing gear assembly **600** in the stow position; and **Figure 8** illustrates landing gear assembly **600** in a landing position. Reference numerals in **Figures 6** through **8** sharing the same value as the reference numerals may correspond to similar components and may have similar structure and functions. In one possible non-limiting illustrative example, the same components among **Figures 6** through **8** may be the same and have the same functions. The illustrative examples shown in **Figures 6** through **8** are non-limiting examples of one possible use of hydraulic actuator assembly **200** shown in **Figures 2** through **5****.** A possible operation of landing gear assembly **600** in conjunction with hydraulic strut **606** is described with respect to **Figures 2** through **5****.**

Turning first to **Figure 7****,** an illustration of a landing gear assembly in the stow position is shown, in accordance with an illustrative example. Landing gear assembly **600** includes hydraulic strut **606.** Hydraulic strut **606** may be the same or similar to hydraulic actuator assembly **200** shown in **Figure 2** through **Figure 5****.** The illustrative example shown in **Figure 7** is a non-limiting example of one possible use of hydraulic actuator assembly **200** shown in **Figures 2** through **5****.** A possible operation of landing gear assembly **600** in conjunction with hydraulic strut **606** is described with respect to **Figures 2** through **5****.**

Turning now to **Figure 6****,** hydraulic strut **606** is shown in the ground configuration, which may correspond to position **300** shown in **Figure 3****.** Landing gear assembly **600** also shows other features, some of which are described above with respect to **Figures 2** through **5****.** These features include bogie beam **602** attached to the lower portion of shock absorber **604.** Lug **608** is attached to the cylinder portion of shock absorber **604.** Plurality of wheels **610** are attached to bogie beam **602.** Plurality of wheels **610** may include forward wheels **610B** and aft wheels **610A.** Hydraulic strut **606** is pivotally attached to the upper portion of shock absorber **604** at lug **608.** Hydraulic strut **606** is pivotally attached to bogie beam **602** at lower lug pivot **612.** Shock absorber **604** is attached to bogie beam **602** by main pivot **616.** In use, lug **608** and lower lug pivot **612** allow hydraulic strut **606** to move in two different orientations with respect to shock absorber **604** and bogie beam **602.** In use, main pivot **616** allows the ends of bogie beam **602** to pivot upwardly and downwardly with respect to shock absorber **604.**

**Figure 7** also depicts the hydraulic strut **606** with the second piston **700** (corresponding to second piston **202** of **Figure 2**) pivotally attached to the upper portion of the shock absorber **604** via lug **608.** The cylinder barrel **607** (corresponding to cylinder barrel **215** of **Figure 2**) of hydraulic strut **606** is pivotally attached to the bogie beam at the lower lug pivot **612.** In other illustrative examples, the hydraulic strut **606** may be reoriented such that the second piston (**700**/**202**) may be attached to the lower lug pivot **612** to the bogie beam **602** and the cylinder barrel (**215**/**607**) may be attached to the cylinder portion of the shock absorber **604.**

As shown in **Figure 7****,** hydraulic strut **606** is actuated such that second piston (**700**/**202**) and telescopic, first piston (**702**/**206**) are extended. In an example, both are fully extended. In this orientation, one end of bogie beam **602** is forced downwardly about main pivot **616.** This orientation and operation is described further with respect to **Figures 2** through **5****.**

After liftoff, the hydraulic strut **606** positions the landing gear assembly **600** at an angle, such that the forward axle is lower than the aft axle, as shown in **Figure 7****.** In an illustrative example, the angle may be twelve degrees, though this value may be varied between less than a degree to eighty degrees or more. Hydraulic strut **606** may be repositioned quickly to stow position shown in **Figure 7** using the small flow required to fill chamber **208** of **Figure 2****.**

Later, the hydraulic strut **606** may be hydraulically de-energized. While in the wheel well, the hydraulic strut **606** may maintain the fully extended position with no supply pressure. The return pressure in chamber **210** may aid in this function. While in this position, no single failure may cause large retraction forces.

Turning now to **Figure 8****,** the hydraulic strut **606** is depicted with the second piston **700** (corresponding to second piston **202** of **Figure 2**) pivotally attached to the upper portion of the shock absorber **604** via lug **608.** The cylinder barrel **607** (corresponding to cylinder barrel **215** of **Figure 2**) of hydraulic strut **606** is pivotally attached to the lower lug pivot **612** which is attached to the bogie beam. In other illustrative examples, the hydraulic strut **606** may be reoriented such that the second piston (**700**/**202**) may be attached to the lower lug pivot **612** to the bogie beam **602** and the cylinder barrel (**215**/**607**) may be attached to the cylinder portion of the shock absorber **604** at lug **608.**

In an illustrative example, the bogie beam angle with respect to the ground may be 23 degrees, though this value may be varied to suit the requirements of the vehicle. This orientation and operation is described further below, with respect to **Figures 2** through **5****.**

Before landing, the hydraulic strut **606** positions the landing gear assembly from position **500** (**Figure 5**) to position **400** (**Figure 4**) by retracting the first piston **206.** This position tilts the bogie beam **602** for a landing position such that the forward axle is higher than the aft axle. In this position, the hydraulic strut **606** is restrained with a prescribed amount of force by pressure in chamber **212** of **Figure 2****.**

During landing, the aft tires will contact the ground first, causing the bogie beam to rotate about main pivot **616.** This motion may cause hydraulic strut **606** to experience an initial high tension load. Hydraulic strut **606** may move with initial low resistance to allow an air-ground sensing system to detect the change in pitch of the bogie beam. As the shock absorber **604** compresses, the bogie beam will continue to rotate about main pivot **616** until the forward tires contact the ground. Once the forward tires touch the ground, the hydraulic strut **606** may experience rapid compression. Hydraulic strut **606** may act as a damper during initial touchdown. In an illustrative example, hydraulic strut **606** may allow the aircraft to land when hydraulic strut **606** is in a fully extended position as shown in **Figure 7****,** if no hydraulic pressure is available, in order to provide for an alternate landing position.

While on the ground, the hydraulic strut **606** allows for normal pitch motion of bogie beam **602** around a main pivot **616** without excessive loads in the hydraulic strut **606** and without overloading the tires. In an illustrative example, hydraulic strut **606** may collapse short enough to prevent any unexpected conditions from impairing landing gear assembly **600** or the aircraft.

Considering **Figures 6** through **8** together, a semi-levered landing gear assembly **600** in accordance with an illustrative example of the disclosure is shown. The landing gear assembly **600** includes a shock absorber **604** of suitable construction to absorb and dampen transient loads exerted between the gear and the ground during ground operations of an aircraft, and to support the aircraft when stationary on the ground. The shock absorber **604** typically includes an upper portion **800** and a lower portion **802** that is telescopingly received in the upper portion such that the length of the shock absorber **604** can vary depending on the amount of the load applied to the landing gear assembly in a direction along the axis of the shock absorber. On initial touchdown, as shown in **Figure 8****,** the amount of load applied to the landing gear assembly **600** is relatively small and, accordingly, the length of the shock absorber **604** is about at a maximum.

The landing gear assembly **600** further includes a wheel truck **804** formed by at least one bogie beam **602** pivotally attached at main pivot **616** to a lower portion **802** of the shock absorber **604.** A plurality of wheels **610** are rotatably supported by the bogie beam **602,** including at least one forward wheel and at least one aft wheel respectively supported at a forward end and an aft end of the bogie beam **602.** In general, for most large aircraft, the wheel truck of a main landing gear assembly may include a plurality of wheels **610,** which may include a pair of forward wheels on an axle at the forward end of bogie beam **602** and a pair of aft wheels on an axle at the aft end of bogie beam **602.** Some illustrative examples may include a plurality of wheels on one or more additional axles between the forward and aft axles. However, the illustrative examples described herein are applicable to any wheel truck configuration having at least one wheel supported by a bogie beam at a location that is longitudinally displaced forward of a main pivot and at least one wheel supported by a bogie beam at a location that is longitudinally displaced aft of a main pivot.

The landing gear assembly **600** also includes a hydraulic strut **606,** which may be hydraulic actuator assembly **200** of **Figure 2****.** Hydraulic strut **606** is pivotally connected at its upper end to the lug **608** at the shock absorber **604** and has its lower end pivotally connected at lower lug pivot **612** on the bogie beam **602** at a location forward of main pivot **616.** The hydraulic strut **606** is a variable-length device enabling the bogie beam **602** to pivot relative to the shock absorber **604.** Additionally, the hydraulic strut **606** is capable of locking up at a fixed length, when suitably controlled as further described above, such that the bogie beam **602** is forced to pivot about lower lug pivot **612** rather than about main pivot **616,** so as to provide a semi-levered function to the landing gear assembly **600.**

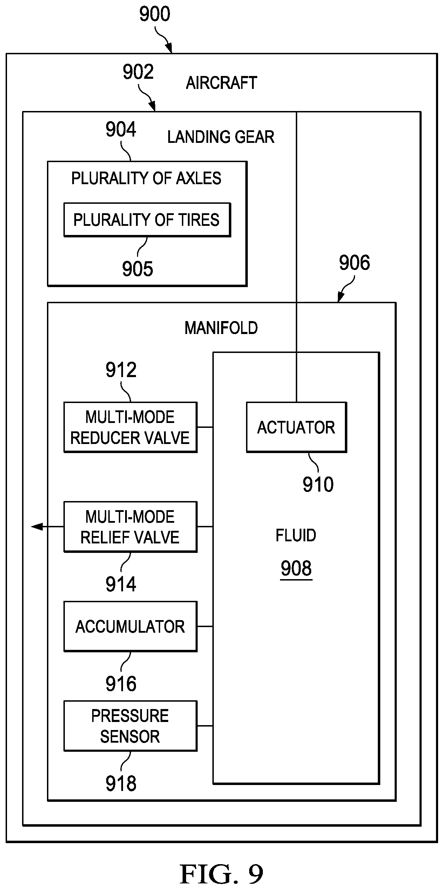

**Figure 9** is an illustration of a block diagram of an aircraft, in accordance with an illustrative example not being part of the invention. Aircraft **900** shown in **Figure 9** may be, for example, aircraft **100** shown in **Figure 1****.** The various components described with respect to **Figure 9** may also be found in **Figures 2** through **8****,** as described further below.

Aircraft **900** includes landing gear **902,** which may include a plurality of axles **904** upon which a plurality of tires **905** are disposed. Landing gear **902** may have, in other examples, one or more axles including one or more tires. Landing gear **902** may be, in some examples, landing gear assembly **108** of **Figure 1** or landing gear assembly **600** of **Figures 6** through **8****.** Plurality of axles **904** may be, for example, part of bogie beam **602** of **Figures 6** through **8****.** Plurality of tires **905** may be, for example, plurality of wheels **610** of **Figures 6** through **8****.**

Landing gear **902** may also include manifold **906.** An actuator **910** is disposed within manifold **906.** In an illustrative example, the pressure of fluid **908** may be varied and then applied to the actuator **910** such that landing gear **902** is restrained in a landing position by actuator **910** with a force that is suitably low to also allow for air-ground sensing during touchdown of the aircraft **900.**

Fluid **908** may be, for example, the fluid that flows through a manifold disposed with respect to manifold **906.** In a particular example, fluid **908** may flow within chambers, such as chambers **208, 210,** and **212** of **Figures 2** through **5****.** Actuator **910** may take other forms, as well, such as additional pistons in a nested piston arrangement.

In an example, manifold **906** may include multi-mode reducer valve **912.** Multi-mode reducer valve **912** may be, for example, multi-mode reducer **216** of **Figure 2****.** Multi-mode reducer valve **912** may be configured to allow variable pressure settings for fluid.

In an example, manifold **906** may include multi-mode relief valve **914.** Multi-mode relief valve **914** may be, for example, multi-mode relief valve **224** of **Figure 2****.** Multi-mode relief valve **914** may be configured to allow fluid **908** to exit manifold **906.** In another example, multi-mode relief valve **914** may be configured to reduce a pressure of fluid **908** while aircraft **900** is on the ground in order to balance loads among the plurality of axles **904.**

In an example, an accumulator **916** may be disposed with respect to manifold **906** such that accumulator **916** absorbs pressure spikes during touchdown of the aircraft **900.** Accumulator **916** may be, for example, accumulator **248** of **Figure 2****.**

In an example, pressure sensor **918** may be connected to at least one of manifold **906** and actuator **910.** Pressure sensor **918** may be configured to monitor a health of landing gear **902.** Pressure sensor **918** may be, for example, pressure sensor **240** of **Figure 2****.**

The illustration of aircraft **900** in **Figure 9** is not meant to imply physical or architectural limitations to the manner in which different illustrative examples may be implemented. Other components in addition to and/or in place of the ones illustrated may be used. Some components may be unnecessary in some illustrative examples. Also, the blocks are presented to illustrate some functional components. One or more of these blocks may be combined and/or divided into different blocks when implemented in different illustrative examples.

The different illustrative examples recognize and take into account that actuator **110** in **Figure 1****,** hydraulic actuator assembly **200** in **Figures 2** through **5****,** hydraulic strut **606** in **Figures 6** through **8****,** actuator **910** in **Figure 9****,** manifold **906** in **Figure 9****,** are examples of different implementations for a hydraulic actuator for a landing gear assembly. The different illustrative examples recognize and take into account that these hydraulic actuators use hydraulic fluid.

For example, the fluid flowing through manifold **122** in **Figure 1** and fluid **908** flowing through manifold **906** in **Figure 9** is hydraulic fluid. This hydraulic fluid may be, for example, without limitation, a liquid comprising, for example, without limitation, phosphate-ester hydraulic fluid.

The different illustrative examples recognize and take into account that the hydraulic actuator may have an alternate extension state when the aircraft performs an alternate landing. As used herein, an "alternate landing" is a landing performed when hydraulic system power is unavailable to control the landing gear for the aircraft. For example, an alternate landing may be an emergency landing.

During an alternate landing, a landing gear assembly for an aircraft may be configured with the wheeled truck assembly positioned with the forward axle lower than the aft axle. Consequently, the hydraulic actuator in the alternate extension state may need to compress more rapidly during an alternate landing as compared to a typical landing.

The different illustrative embodiments recognize and take into account that rapid compression of the hydraulic actuator may require that the hydraulic fluid be expelled from the hydraulic actuator. In some cases, this expulsion of hydraulic fluid from the hydraulic actuator may require higher flow rates than desired. Further, in some cases, managing these high flow rates may be more difficult and require larger and/or heavier components than desired.

The different illustrative embodiments recognize and take into account that a different configuration for the pistons used in actuator **110** in **Figure 1****,** hydraulic actuator assembly **200** in **Figures 2** through **5****,** hydraulic strut **606** in **Figures 6** through **8****,** and actuator **910** in **Figure 9** and/or introducing a compressible gas into these hydraulic actuators may allow these hydraulic actuators to rapidly compress during an alternate landing. In particular, using a compressible gas in a hydraulic actuator may reduce the amount of hydraulic fluid that needs to be expelled from the hydraulic actuator.

Thus, the different illustrative embodiments provide a hydraulic actuator configured to also use a compressible gas that does not need to be expelled from the hydraulic actuator when the hydraulic actuator is rapidly compressed during an alternate landing. In one illustrative embodiment, a hydraulic strut assembly comprises a housing, a first piston, a second piston, and a third piston. The housing comprises outer and inner cylindrical structures. An outer chamber is formed between the outer cylindrical structure and the inner cylindrical structure and is configured to receive a first fluid. The first piston is positioned between the outer and inner cylindrical structures. The second piston is nested within the first piston. The inner cylindrical structure, the first piston, and the second piston form an inner chamber in which a volume of the inner chamber changes when at least one of the first and second pistons move. The inner chamber is configured to hold a second fluid comprising a gas. The third piston is positioned between the outer cylindrical structure and the first piston. The first, second, and third pistons are configured to move in a direction parallel to an axis through the housing.

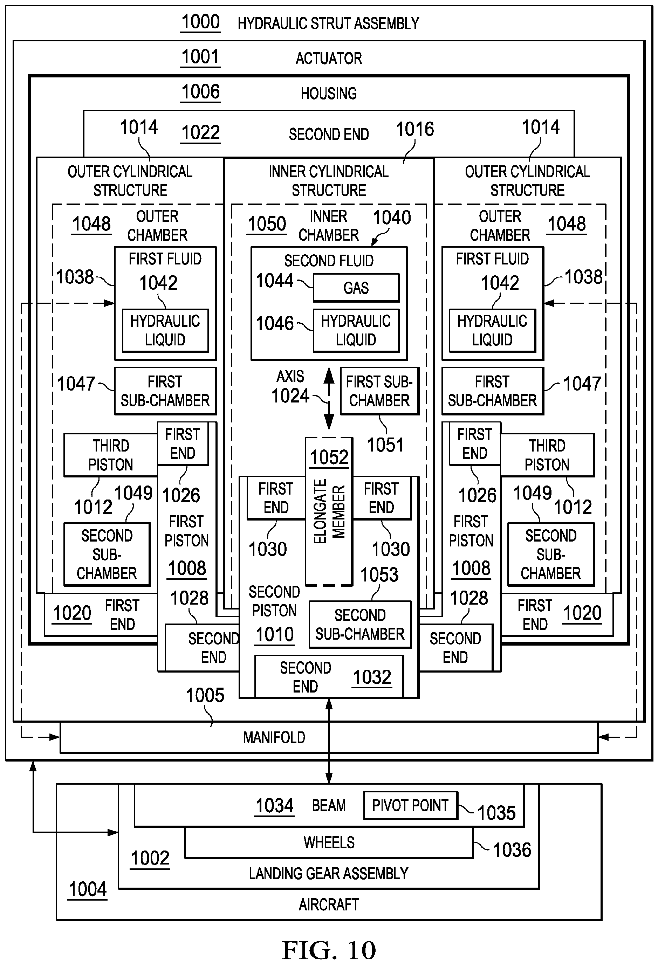

Turning now to **Figure 10****,** an illustration of a hydraulic strut assembly in the form of a block diagram is depicted in accordance with an illustrative embodiment. In these illustrative examples, hydraulic strut assembly **1000** may be part of landing gear assembly **1002.**

Hydraulic strut assembly **1000** may also be referred to as a strut assembly or a telescopic hydraulic strut assembly. Further, in some cases, hydraulic strut assembly **1000** may be referred to as an actuator assembly or a hydraulic actuator assembly.

Landing gear assembly **1002** is an example of one implementation for landing gear assembly **108** in **Figure 1****.** Landing gear assembly **1002** is a semi-levered landing gear assembly in these illustrative examples. As depicted, landing gear assembly **1002** may be part of aircraft **1004** in these examples. In other illustrative examples, landing gear assembly **1002** may be part of some other suitable type of aerospace vehicle.

Landing gear assembly **1002** may take the form of any assembly configured to enable semi-levered action. As depicted, hydraulic strut assembly **1000** in landing gear assembly **1002** comprises actuator **1001** and manifold **1005.** In some illustrative examples, landing gear assembly **108** in aircraft **100** in **Figure 1** may use hydraulic strut assembly **1000** in **Figure 10** instead of actuator **110** in **Figure 1****.** Further, in other illustrative examples, landing gear **902** in **Figure 9** may use actuator **1001** and manifold **1005** in **Figure 10** instead of actuator **910** and manifold **906** in **Figure 9****.**

As depicted, actuator **1001** comprises housing **1006,** first piston **1008,** second piston **1010,** and third piston **1012.** First piston **1008,** second piston **1010,** and third piston **1012** may be referred to as hydraulic pistons in some illustrative examples. In other illustrative examples, first piston **1008,** second piston **1010,** and third piston **1012** may be referred to as a telescopic piston, a main piston, and a floating piston, respectively.

In these illustrative examples, housing **1006** comprises outer cylindrical structure **1014** and inner cylindrical structure **1016.** Outer cylindrical structure **1014** may be formed by an outer wall having an inner surface and an outer surface. Inner cylindrical structure **1016** may be formed by an inner wall having an inner surface and an outer surface.

Inner cylindrical structure **1016** is located within outer cylindrical structure **1014.** Further, inner cylindrical structure **1016** may be associated with outer cylindrical structure **1014.** For example, housing **1006** has first end **1020** and second end **1022.** First end **1020** may be the bottom end of housing **1006,** while second end **1022** may be the top end of housing **1006.** Inner cylindrical structure **1016** may be associated with outer cylindrical structure **1014** at second end **1022** of housing **1006.**

Further, axis **1024** is an axis that runs through housing **1006** from first end **1020** of housing **1006** to second end **1022** of housing **1006.** In one illustrative example, axis **1024** is a center axis through actuator **1001.** For example, axis **1024** may be a center axis along which both inner cylindrical structure **1016** and outer cylindrical structure **1014** are aligned. In this manner, inner cylindrical structure **1016** and outer cylindrical structure **1014** may be concentric to each other with respect to axis **1024.** Movement in a direction parallel to axis **1024** may be considered linear movement.

First piston **1008,** second piston **1010,** and third piston **1012** are associated with housing **1006.** When one component is "associated" with another component, the association is a physical association in these illustrative examples. For example, a first component, such as first piston **1008,** may be considered to be associated with a second component, such as housing **1006,** by being secured to the second component, bonded to the second component, mounted to the second component, welded to the second component, fastened to the second component, and/or connected to the second component in some other suitable manner. Further, the first component may be movably connected to the second component such that at least one of these components may move relative to the other component.

Further, the first component also may be connected to the second component using a third component. The first component may also be considered to be associated with the second component by being formed as part of and/or an extension of the second component. For example, third piston **1012** is used to associate first piston **1008** with housing **1006.** Further, first piston **1008** is used to associate second piston **1010** with housing **1006.**

Additionally, the first component may be considered to be associated with the second component by being physically connected to the second component in a manner that physically constrains motion of the first component relative to the second component. For example, first piston **1008** may be associated with housing **1006** in a manner that causes motion of first piston **1008** to be constrained relative to housing **1006.** The movement of first piston **1008** may be constrained to movement substantially parallel to axis **1024.**

In particular, first piston **1008,** second piston **1010,** and third piston **1012** are a nested series of pistons. In these illustrative examples, these three pistons are concentric to each other with respect to axis **1024.** In particular, first piston **1008** may be disposed within third piston **1012** and second piston **1010** may be disposed within first piston **1008.** In this manner, first piston **1008,** second piston **1010,** and third piston **1012** may be substantially aligned with respect to axis **1024** in these illustrative examples.

First piston **1008** is positioned between outer cylindrical structure **1014** and inner cylindrical structure **1016.** In particular, first piston **1008** is located between an inner surface of outer cylindrical structure **1014** and an outer surface of inner cylindrical structure **1016.** Second piston **1010** is nested within first piston **1008.**

As depicted, first piston **1008** has first end **1026** and second end **1028.** First end **1026** may be the top end of first piston **1008,** while second end **1028** may be the bottom end of first piston **1008.** Further, second piston **1010** has first end **1030** and second end **1032.** First end **1030** may be the top end of second piston **1010,** while second end **1032** may be the bottom end of second piston **1010.**

In these illustrative examples, first piston **1008** is configured to move in a direction parallel to axis **1024** relative to first end **1020** of housing **1006.** In other words, first piston **1008** may move in a direction parallel to axis **1024** such that a position of first piston **1008** relative to first end **1020** of housing **1006** changes.

For example, a position of second end **1028** of first piston **1008** relative to first end **1022** of housing **1006** changes when first piston **1008** moves in a direction parallel to axis **1024.** When first piston **1008** moves in a direction towards second end **1022** of housing **1006,** first piston **1008** is considered to be retracting. When first piston **1008** moves in a direction away from second end **1022** of housing **1006,** first piston **1008** is considered to be extending.

In these illustrative examples, second piston **1010** is configured to move in a direction parallel to axis **1024** relative to second end **1028** of first piston **1008.** In other words, second piston **1010** may move in a direction parallel to axis **1024** such that a position of second piston **1010** relative to second end **1028** of first piston **1008** changes.

For example, the position of first end **1030** of second piston **1010** relative to second end **1028** of first piston **1008** changes when second piston **1010** moves in a direction parallel to axis **1024.** When second piston **1010** moves in a direction towards second end **1022** of housing **1006,** second piston **1010** is considered to be retracting. When second piston **1010** moves in a direction away from second end **1022** of housing **1006,** second piston **1010** is considered to be extending.

When actuator **1001** is part of landing gear assembly **1002,** second end **1032** of second piston **1010** may be connected to beam **1034** in landing gear assembly **1002.** Beam **1034** may be referred to as a "truck beam" or a "bogie beam" in some illustrative examples. Beam **1034** is connected to wheels **1036** for landing gear assembly **1002.**

In one illustrative example, beam **1034** may be configured to pivot about pivot point **1035.** For example, second end **1032** of second piston **1010** may be connected to beam **1034** such that movement of second piston **1010** in a direction parallel to axis **1024** causes rotation of beam **1034** about pivot point **1035.** Rotation of beam **1034** about pivot point **1035** may change the position of wheels **1036** relative to each other. Similarly, rotation of beam **1034** about pivot point **1035** may cause second piston **1010** to move in a direction parallel to axis **1024.**

As depicted, third piston **1012** is located between an inner surface of outer cylindrical structure **1014** of housing **1006** and first piston **1008.** Further, third piston **1012** may move in a direction parallel to axis **1024.**

In these illustrative examples, movement of first piston **1008,** second piston **1010,** and third piston **1012** is controlled by first fluid **1038** and second fluid **1040** in actuator **1001.** Outer chamber **1048** of actuator **1001** is configured to receive first fluid **1038.** Inner chamber **1050** of actuator **1001** is configured to receive second fluid **1040.**

Outer chamber **1048** is formed by the space between outer cylindrical structure **1014** and inner cylindrical structure **1016.** In particular, this space includes the space surrounded by at least one of the inner surface of outer cylindrical structure **1014,** the outer surface of inner cylindrical structure **1016,** and first piston **1008.**

In these illustrative examples, the volume of outer chamber **1048** that is configured to hold first fluid **1038** is determined by the position of first piston **1008.** For example, the volume of outer chamber **1048** changes when first piston **1008** moves in a direction parallel to axis **1024.**

Further, third piston **1012** is configured to move in a direction parallel to axis **1024** to cause outer chamber **1048** to divide into first sub-chamber **1047** and second sub-chamber **1049.** The volumes of first sub-chamber **1047** and second sub-chamber **1049** are determined by the position of third piston **1012** within outer cylindrical structure **1014.**

When third piston **1012** is located at first end **1020** of housing **1006** within outer cylindrical structure **1014,** the volume of second sub-chamber **1049** may be substantially zero. However, as third piston **1012** moves away from first end **1020** and towards second end **1022** of housing **1006,** the volume of second sub-chamber **1049** increases and the volume of first sub-chamber **1047** decreases.

Inner chamber **1050** is formed by inner cylindrical structure **1016** of housing **1006,** first piston **1008,** and second piston **1010.** In these illustrative examples, the volume of inner chamber **1050** configured to hold second fluid **1040** is determined by the position of first piston **1008** and the position of second piston **1010.** For example, the volume of inner chamber **1050** is changed when first piston **1008** and/or second piston **1010** moves in a direction parallel to axis **1024.**

As depicted in these examples, first fluid **1038** comprises hydraulic liquid **1042,** and second fluid **1040** comprises gas **1044** and hydraulic liquid **1046.** Gas **1044** is a compressible gas in these examples. For example, gas **1044** may comprise nitrogen. Of course, in other illustrative examples, gas **1044** may comprise air, helium, and/or some other suitable type of compressible gas.

Hydraulic liquid **1042** and hydraulic liquid **1046** may be the same type of hydraulic liquid in these illustrative examples. These hydraulic liquids may comprise water, oil, phosphate-ester fluid, and/or other suitable types of hydraulic liquids.

Hydraulic liquid **1046** in inner chamber **1050** may be used to lubricate any devices associated with movement between inner cylindrical structure **1016,** first piston **1008,** and/or second piston **1010** that are exposed in inner chamber **1050.** These devices may include, for example, without limitation, any number of bearings, seals, and/or other suitable types of mechanical devices.

The flow of first fluid **1038** into and out of outer chamber **1048** is controlled by manifold **1005** in hydraulic strut assembly **1000,** in these illustrative examples. Manifold **1005** is associated with actuator **1001.** Manifold **1005** is a structure comprising channels through which first fluid **1038** may flow. Any number of valves, ports, sensors, and/or other suitable components may be associated with this structure in manifold **1005** to control the flow of first fluid **1038** through manifold **1005,** as well as the flow of first fluid **1038** into and out of outer chamber **1048.**

The amount and pressure of first fluid **1038** in first sub-chamber **1047** and second sub-chamber **1049** in outer chamber **1048** may determine the position of third piston **1012** in outer chamber **1048.** For example, as first fluid **1038** enters second sub-chamber **1049** and exits first sub-chamber **1047,** third piston **1012** may float upwards through outer chamber **1048** in a direction parallel to axis **1024.**

Movement of third piston **1012** may cause movement of first piston **1008.** For example, the amount and/or pressure of first fluid **1038** in second sub-chamber **1049** may be increased such that third piston **1012** moves upwards, towards second end **1022** of housing **1006,** in a direction parallel to axis **1024** and pushes against first end **1026** of first piston **1008.** Third piston **1012** pushes against first end **1026** of first piston **1008** in a manner that moves first piston **1008** upwards in a direction parallel to axis **1024.** In other words, when third piston **1012** pushes against first end **1026** of first piston **1008,** first piston **1008** retracts until first end **1026** reaches second end **1022** of housing **1006.**

Further, in these illustrative examples, first piston **1008** may be fully extended when the amount and/or pressure of first fluid **1038** in second sub-chamber **1049** is not sufficient enough to cause third piston **1012** to push against first end **1026** of first piston **1008.** In other words, without third piston **1012** pushing against first end **1026** towards second end **1022** of housing **1006,** first piston **1008** may fully extend.

Second fluid **1040** may be introduced into inner chamber **1050** in a number of different ways. As one illustrative example, an operator may pour hydraulic liquid **1046** into inner chamber **1050** through an open port. The operator may subsequently pump gas **1044** into inner chamber **1050.** The operator may be, for example, a human operator, a robotic operator, or some other suitable type of operator.

When first piston **1008** and third piston **1012** are in retracted positions and a load is not being applied to second end **1032** of second piston **1010** by beam **1034,** the pressure of gas **1044** causes gas **1044** within inner chamber **1050** to push against first end **1030** of second piston **1010** in a direction away from second end **1022** of housing **1006.** In other words, the pressure of gas **1044** causes second piston **1010** to extend.

When the amount and/or pressure of first fluid **1038** in second sub-chamber **1049** is not sufficient enough to cause third piston **1012** and first piston **1008** to retract, the pressure of gas **1044** may cause second piston **1010** to fully extend. When second piston **1010** is fully extended, first end **1030** of second piston **1010** pushes against second end **1028** of first piston **1008** in the direction away from second end **1022** of housing **1006.** Further, when second piston **1010** is fully extended, the volume of inner chamber **1050** is increased as compared to when second piston **1010** is retracted. The extension of second piston **1010** causes gas **1044** to expand and fill the increased volume of inner chamber **1050.**

In these illustrative examples, when a compressive load is applied to second end **1032** of second piston **1010** by beam **1034,** second piston **1010** may retract. This retraction may occur even when first piston **1008** and third piston **1012** are in retracted positions. When second piston **1010** retracts, gas **1044** is compressed. Further, when second piston **1010** is fully retracted, the volume of inner chamber **1050** is decreased as compared to when second piston **1010** is extended.

When both first piston **1008** and second piston **1010** are fully extended, actuator **1001** is configured to be fully extended. When first piston **1008** is fully retracted and second piston **1010** is fully retracted, actuator **1001** is considered to be fully compressed. When first piston **1008** is fully retracted and second piston **1010** is fully extended, actuator **1001** is configured to be retracted.

As depicted, second piston **1010** may have an open end to increase the volume of inner chamber **1050.** Second piston **1010** may also have elongate member **1052.** Elongate member **1052** may be configured to divide inner chamber **1050** into first sub-chamber **1051** and second sub-chamber **1053.** First sub-chamber **1051** is located within inner cylindrical structure **1016.** Second sub-chamber **1053** is located within second piston **1010.**

In particular, elongate member **1052** may have open ends such that gas **1044** in inner chamber **1050** may move between first sub-chamber **1051** and second sub-chamber **1053.** In one illustrative example, elongate member **1052** may extend into first sub-chamber **1051** beyond a fluid line for hydraulic liquid **1046** in inner chamber **1050.** In this manner, the chances of hydraulic liquid **1046** entering the cavity inside second piston **1010** may be reduced. In another illustrative example, elongate member **1052** may extend into second sub-chamber **1053** to draw any hydraulic liquid **1046** from second sub-chamber **1053** into first sub-chamber **1051.** This action may occur when at least one of the second piston **1010** and the first piston **1008** extends.

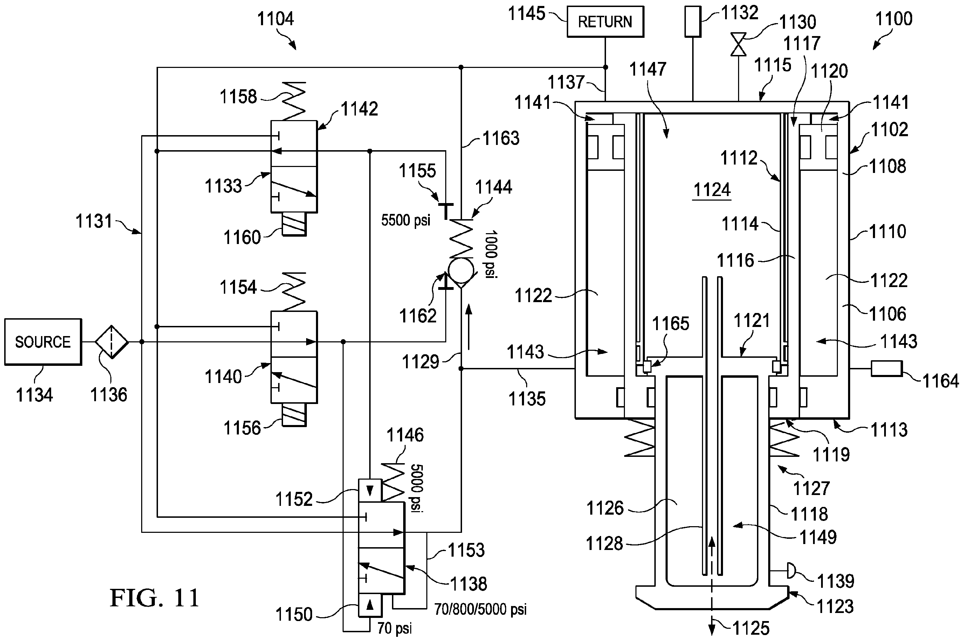

In these illustrative examples, gas **1044** in inner chamber **1050** allows second piston **1010** to retract without the resistance of hydraulic liquid motion in response to wheels **1036** contacting ground with actuator **1001** in a fully extended state. Control of the positions and movement of first piston **1008,** second piston **1010,** and third piston **1012** using first fluid **1038** and second fluid **1040** is described in greater detail with respect to a particular implementation for hydraulic strut assembly **1100** in **Figure 11** below.

The illustration of hydraulic strut assembly **1000** in **Figure 10** is not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment

For example, in some illustrative examples, pistons in addition to first piston **1008,** second piston **1010,** and third piston **1012** may be present in actuator **1001.** In other illustrative examples, manifold **1005** may include components not described above. For example, manifold **1005** may include valves not described in **Figure 10****.**

**Figure 11** is an illustration of a cross-sectional view of a hydraulic strut assembly, depicted in accordance with an illustrative embodiment. In this illustrative example, hydraulic strut assembly **1100** is an example of one implementation for hydraulic strut assembly **1000** in **Figure 10****.** Hydraulic strut assembly **1100** may be used in a landing gear assembly, such as, for example, landing gear assembly **1002** in **Figure 10****.**

As depicted, hydraulic strut assembly **1100** comprises actuator **1102** and manifold **1104.** Actuator **1102** is an example of one implementation for actuator **1001** in **Figure 10****.** Manifold **1104** is an example of one implementation for manifold **1005** in **Figure 10****.**

In this illustrative example, actuator **1102** includes housing **1106,** first piston **1116,** second piston **1118,** and third piston **1120.** Housing **1106,** first piston **1116,** second piston **1118,** and third piston **1120** are examples of one implementation for housing **1006,** first piston **1008,** second piston **1010,** and third piston **1012,** respectively, in **Figure 10****.**

In this illustrative example, housing **1106** comprises outer cylindrical structure **1108** and inner cylindrical structure **1112.** Further, housing **1106** has first end **1113** and second end **1115.**

First piston **1116,** second piston **1118,** and third piston **1120** are associated with housing **1106** in this depicted example. First piston **1116** has first end **1117** and second end **1119.** Second piston **1118** has first end **1121** and second end **1123.**

First piston **1116,** second piston **1118,** and third piston **1120** are configured to move linearly in a direction parallel to axis **1125.** Axis **1125** is a center axis through actuator **1102** in this depicted example. In particular, first piston **1116** may move in a direction parallel to axis **1125** relative to first end **1113** of housing **1106.** Movement of first piston **1116** away from second end **1115** of housing **1106** is extension. Movement of first piston **1116** toward second end **1115** of housing **1106** is retraction.

Second piston **1118** may move in a direction parallel to axis **1125** relative to second end **1119** of first piston **1116.** Movement of second piston **1118** toward second end **1115** of housing **1106** is retraction. Movement of second piston **1118** away from second end **1115** of housing **1106** is extension. When second piston **1118** retracts, second end **1123** of second piston **1118** may contact spring system **1127.**

Spring system **1127** may comprise one or more springs associated with second end **1119** of first piston **1116** and/or second end **1123** of second piston **1118.** Spring system **1127** may comprise, for example, at least one of a mechanical spring, a coil spring, a ring spring, a leaf spring, an elastomeric spring, and some other suitable of spring device.

Spring system **1127** is configured to compress in response to a load applied to spring system **1127** by second end **1123** of second piston **1118** and/or second end **1119** of first piston **1116.** Spring system **1127** reduces the acceleration and/or force with which first piston **1116** retracts when second end **1123** of second piston **1118** contacts spring system **1127.**

Further, spring system **1127** prevents second end **1123** of second piston **1118** from directly contacting second end **1119** of first piston **1116** when second piston **1118** retracts. In this manner, undesired effects to second end **1119** of first piston **1116** that may be caused by second end **1123** of second piston **1118** contacting second end **1119** of first piston **1116** may be prevented.

In this illustrative example, third piston **1120** is located between first piston **1116** and the inner surface of outer cylindrical structure **1108** of housing **1106.** As depicted, third piston **1120** may move between first piston **1116** and outer cylindrical structure **1108** in a direction parallel to axis **1125.** When third piston **1120** moves upwards towards second end **1115** of housing **1106,** third piston **1120** may push first end **1117** of first piston **1116** towards second end **1115** of housing **1106,** causing first piston **1116** to retract. When third piston **1120** moves away from second end **1115** of housing **1106,** first piston **1116** is allowed to extend.

As depicted, outer chamber **1122** is formed in the space surrounded by outer cylindrical structure **1108,** inner cylindrical structure **1112,** and first piston **1116.** Third piston **1120** divides outer chamber **1122** into first sub-chamber **1141** and second sub-chamber **1143.** Movement of third piston **1120** in the direction parallel to axis **1125** causes the volumes of first sub-chamber **1141** and second sub-chamber **1143** to change.

Further, inner chamber **1124** is formed by inner cylindrical structure **1112,** first piston **1116** and second piston **1118.** Movement of second piston **1118** in a direction parallel to axis **1125** changes a volume of inner chamber **1124.** In particular, the volume of inner chamber **1124** increases when second piston **1118** extends, and the volume of inner chamber **1124** decreases when second piston **1118** retracts. Additionally, extension of first piston **1116** also may increase the volume of inner chamber **1124.**

In this illustrative example, second piston **1118** has tube **1128.** Tube **1128** is an example of one implementation for elongate member **1052** in **Figure 10****.** Both ends of tube **1128** are open in this example. In this manner, tube **1128** connects first sub-chamber **1147** of inner chamber **1124** to second sub-chamber **1149** of inner chamber **1124.** Second sub-chamber **1149** of inner chamber **1124** is formed by cavity **1126** inside second piston **1118.** In some illustrative examples, one or both ends of tube **1128** may be partially open or partially covered.

Charge valve **1130** and pressure sensor **1132** are associated with second end **1115** of housing **1106** in this depicted example. Charge valve **1130** provides a mechanism for adding fluid to inner chamber **1124.** In particular, both a hydraulic liquid and a compressible gas may be added to inner chamber **1124** through charge valve **1130.** Alternatively, a separate port may be used to fill and/or drain hydraulic liquid from inner chamber **1124.** Also, in some illustrative examples, port **1139** located near second end **1123** of second piston **1118** may be used for filling and/or draining fluid from inner chamber **1124.** Pressure sensor **1132** is configured to measure the pressure of a compressible gas held in inner chamber **1124.**

In this illustrative example, manifold **1104** of hydraulic strut assembly **1100** is associated with actuator **1102.** Manifold **1104** is depicted in the form of a schematic in this depicted example. As depicted, manifold **1104** has plurality of channels **1131** and plurality of valves **1133** through which a hydraulic liquid may flow within manifold **1104.**

The hydraulic liquid flowing through manifold **1104** may enter second sub-chamber **1143** of outer chamber **1122** through channel **1135** in plurality of channels **1131.** The hydraulic liquid in first sub-chamber **1141** of outer chamber **1122** may return to manifold **1104** through channel **1137** in plurality of channels **1131.**

Hydraulic liquid enters manifold **1104** from source **1134.** Source **1134** may be any suitable type of supply of hydraulic liquid. For example, source **1134** may be a container or tank filled with hydraulic liquid. The hydraulic fluid in source **1134** may have sufficient pressure to enable movement of fluid through manifold **1104** and into second sub-chamber **1143** of outer chamber **1122** to facilitate movement of third piston **1120** and first piston **1116.**

Hydraulic liquid flows from source **1134** into manifold **1104** through filter **1136.** Further, hydraulic liquid may flow from manifold **1104** into return **1145.** Return **1145** may take the form of, for example, without limitation, a storage container, a tank, or some other suitable component configured to hold hydraulic liquid received from manifold **1104.**

The flow of hydraulic liquid through manifold **1104** is controlled using plurality of valves **1133.** Plurality of valves **1133** includes valve **1138,** valve **1140,** valve **1142,** and valve **1144.** Valve **1138** may be a multi-mode pressure-reducing valve in this depicted example. Further, valve **1140** may be a first solenoid shut-off valve, and valve **1142** may be a second solenoid shut-off valve. Valve **1144** may be a multi-mode pressure-relief valve.

Spring **1146** indicates an "at rest" mode of operation for valve **1138.** As depicted, when valve **1138** is at rest, hydraulic liquid flowing from filter **1136** is allowed to flow through channel **1135** and into second sub-chamber **1143** of outer chamber **1122.** Valve **1138** is at rest when the pressure of hydraulic liquid at input **1150** has not reached a selected level and the pressure of hydraulic liquid at input **1153** has not reached a selected level.

When the actuator is to be placed in a retracted position, valve **1138** reduces pressure of source **1134** by sensing the outlet pressure at channel **1135** and compressing spring **1146** to adjust valve position and maintain a selected pressure level. Valve **1138** senses the pressure of channel **1135** as input **1153** into valve **1138.** In this manner, hydraulic liquid may have a pressure of about 5.5 MPa (800 psi) and may flow into second sub-chamber **1143** of outer chamber **1122** through channel **1135,** retracting third piston **1120** and first piston **1118.**

Valve **1138** may change positions based on input **1150,** input **1152,** and input **1153.** When actuator **1102** is to be fully extended, the pressure of hydraulic liquid at input **1150** is increased to a selected level or greater. Consequently, the pressure level at input **1150** pushes against spring **1146** and valve **1138** changes position to allow the flow of hydraulic liquid from second sub-chamber **1143** of outer chamber **1122** into plurality of channels **1131** and valve **1138.** This hydraulic fluid may exit manifold **1104** at return **1145.** In this illustrative example, the outlet pressure for valve **1138** in channel **1135** may be about 0.5 MPa (70 psi).

The pressure of hydraulic liquid at the outlet of valve **1138** and channel **1135** is reduced such that third piston **1120** moves downwards freely. This movement of third piston **1120** allows first piston **1116** and second piston **1118** to extend such that actuator **1102** fully extends.

When the actuator is to be placed in a retracted position and locked, the pressure of hydraulic liquid at input **1152** is increased to a selected level or greater. Consequently, valve **1138** is blocked from moving to allow hydraulic liquid having a pressure substantially equal to source **1134** to flow through valve **1138** and into second sub-chamber **1143** of outer chamber **1122** through channel **1135.** Pressure of source fluid **1134** may be, for example, without limitation, about 35 MPa (5000 psi).

Further, spring **1154** for valve **1140** indicates an at rest mode of operation for valve **1140.** When valve **1140** is at rest, hydraulic liquid flowing from filter **1136** is allowed to pass through valve **1140** to input **1150** for valve **1138** and to input **1162** for valve **1144.** Valve **1140** is at rest when solenoid actuator **1156** associated with valve **1140** is not activated. Solenoid actuator **1156** may be activated in response to electrical signals. These electrical signals may be received from a control system located onboard the aircraft.

When solenoid actuator **1156** is activated, spring **1154** is compressed and valve **1140** changes position to allow hydraulic liquid to flow towards return **1145 to** reduce pressure levels at input **1162** for valve **1144** and input **1150** for valve **1138.** Solenoid actuator **1156** may be activated when actuator **1102** is to be moved to the reacted position in which first piston **1116** is retracted and second piston **1118** is extended.

Spring **1158** for valve **1142** indicates an at rest mode of operation for valve **1142.** When valve **1142** is at rest, hydraulic liquid is blocked from flowing through valve **1142.** When actuator **1102** is to be retracted and locked, solenoid actuator **1160** associated with valve **1142** is activated. This activation causes spring **1158** to compress and valve **1142** to change position such that hydraulic liquid flowing from filter **1136** may flow through valve **1142** towards input **1152** for valve **1138** and input **1155** for valve **1144.** This flow of hydraulic liquid towards input **1152** for valve **1138** increases the pressure at input **1152** and blocks valve **1138** from moving out of the at rest state. Further, the flow of hydraulic liquid towards input **1155** for valve **1144** increases the pressure at input **1155** and changes the pressure level at which valve **1144** will open and allow hydraulic liquid to flow through valve **1144.**

Valve **1144** is configured to open to allow hydraulic liquid to flow from channel **1129** into channel **1163** when the pressure of the hydraulic liquid at channel **1129** reaches either a low pressure setting or a high pressure setting selected for valve **1144.** The low pressure setting for valve **1144** may be any pressure value that is between the pressure value for source **1134** and the pressure value for return **1145.** The high pressure setting for valve **1144** may be higher than the pressure value for source **1134.**

The pressure value for source **1134** may be referred to as the source pressure. The pressure value for return **1145** may be referred to as the return pressure. If the source pressure is about 35 MPa (5000 psi), and the return pressure is about 0.5 (70 psi), then the low pressure setting for valve **1144** may be about 7 MPa (1000 psi) and the high pressure setting for valve **1144** may be about 38 MPa (5500 psi).

When the pressure of the hydraulic liquid at channel **1129** decreases to a pressure value that is lower than the low pressure setting for valve **1144,** valve **1144** closes and blocks the flow of hydraulic liquid through valve **1144** into channel **1163.** Additionally, when the pressure of hydraulic liquid at input **1162** reaches the desired level of pressure, valve **1144** will open to allow hydraulic liquid to flow from channel **1129** into channel **1163.**

In this manner, plurality of valves **1133** controls the flow of hydraulic liquid through manifold **1104** as well as into and out of outer chamber **1122.** Further, pressure sensor **1164** is configured to measure the pressure of hydraulic liquid within outer chamber **1122.**

Additionally, seal system **1165** may be associated with first end **1121** of second piston **1118.** Seal system **1165** may comprise any number of seals configured to allow second piston **1118** to move relative to inner cylindrical structure **1112** and provide a seal for inner chamber **1124.** In particular, this seal for inner chamber **1124** is formed when second piston **1118** is retracted into inner cylindrical structure **1112** and seal system **1165** engages with the inner surface of inner cylindrical structure **1112.**

Seal system **1165** may be configured to divide first sub-chamber **1147** of inner chamber **1124** into a first portion and a second portion. The first portion may be the portion of first sub-chamber **1147** above seal system **1165** and the second portion may be the portion of first sub-chamber **1147** below seal system **1165.** As second piston **1118** is retracted into inner cylindrical structure **1112,** the volume of the first portion of first sub-chamber **1147** decreases and the volume of the second portion of first sub-chamber **1147** increases. Alternately, as second piston **1118** is extended, the volume of the first portion of first sub-chamber **1147** increases and the volume of the second portion of first sub-chamber **1147** decreases. The change in the volume of the first portion and the second portion of first sub-chamber **1147** causes the hydraulic liquid portion of the second fluid to be forced past seal system **1165** to provide resistance to the movement of the second piston **1118.**

Further, retraction of second piston **1118** causes the seal formed by seal system **1165** to be moved.

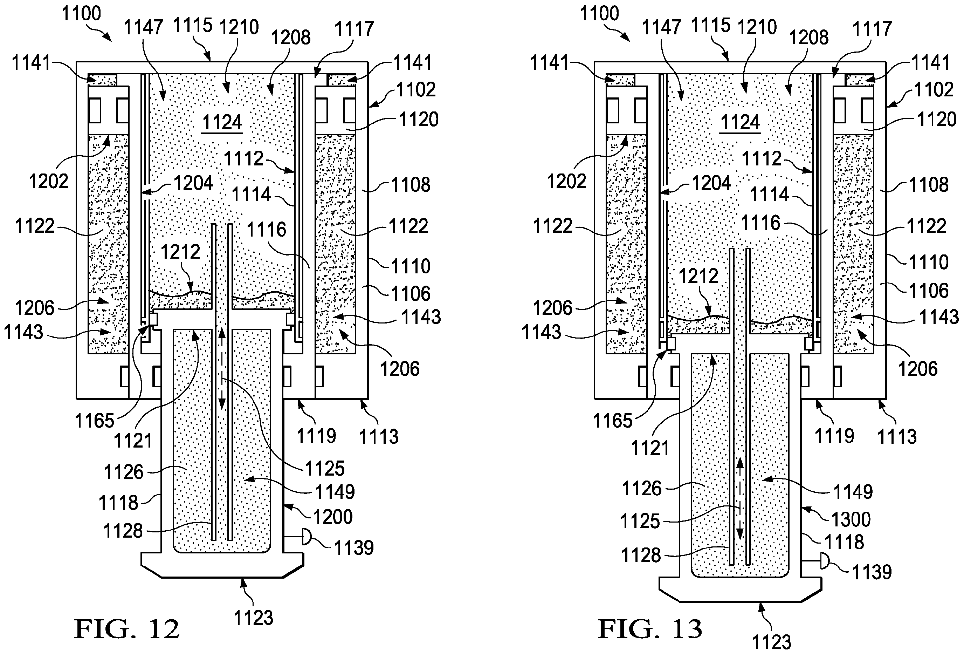

**Figures 12** through **14** are illustrations of different positions for the pistons in an actuator, depicted in accordance with an illustrative embodiment. In **Figures 12** through **14****,** actuator **1102** from **Figure 11** is depicted in a compressed position, a retracted position, and an extended position, respectively.

**Figure 12** is an illustration of actuator **1102** in a compressed position, depicted in accordance with an illustrative embodiment. In this illustrative example, actuator **1102** has compressed position **1200.** Actuator **1102** may have compressed position **1200** when, for example, the aircraft in which actuator **1102** is used is parked on the ground.

As depicted, third piston **1120** and first piston **1116** are in retracted positions **1202** and **1204,** respectively. In other words, third piston **1120** has moved upwards such that first piston **1116** is fully retracted such that first end **1117** of first piston **1116** is at second end **1115** of housing **1106.**

In this illustrative example, a compressive load has been applied to second end **1123** of second piston **1118** to cause second piston **1118** to partially retract. In particular, first end **1121** of second piston **1118** has moved upwards and away from second end **1119** of first piston **1116.** The load applied to second end **1123** of second piston **1118** may be a load transferred to second end **1123** of second piston **1118** in response to the landing gear assembly contacting the ground.

The positions of first piston **1116,** second piston **1118,** and third piston **1120** in **Figure 12** may be determined by first fluid **1206** in outer chamber **1122** and second fluid **1208** in inner chamber **1124.** First fluid **1206** is a hydraulic liquid. This hydraulic liquid may be introduced into outer chamber **1122** by manifold **1104** in **Figure 11****.** Further, first fluid **1206** may flow out of outer chamber **1122** and return to manifold **1104** in **Figure 11****.**

Second fluid **1208** comprises both gas **1210** and hydraulic liquid **1212.** Gas **1210** is a compressible gas. When second piston **1118** retracts, gas **1210** compresses. The compressibility of gas **1210** allows for rapid compression of the second piston without the resistance of fluid flow. Second fluid **1208** may be introduced into inner chamber **1124** through charge valve **1130** in **Figure 11****.** Hydraulic liquid **1212** is used to lubricate seal system **1165** and reduce undesired effects to seal system **1165** in response to operation of actuator **1102.**

When first piston **1116** is fully retracted, seal system **1165** forms a seal between first end **1121** of second piston **1118** and a lower end of inner cylindrical structure **1112.** When second piston **1118** moves, second fluid **1208** will flow past seal system **1165.** Seal system **1165** may include a small fluid passage to allow the speed of movement of second piston **1118** to be reduced. In this manner, bogie beam motion may be dampened when the aircraft is traveling on the ground.

As depicted, tube **1128** extends into inner chamber **1124** above a fluid line for hydraulic liquid **1212.** In this manner, the possibility of hydraulic liquid **1212** entering cavity **1126** may be reduced. However, gas **1210** may be allowed to expand into cavity **1126.**

As depicted in **Figure 12****,** tube **1128** extends into inner chamber **1124** such that hydraulic liquid **1212** does not enter cavity **1126.** In some cases, a portion of hydraulic liquid **1212** may enter cavity **1126** through tube **1128** when actuator **1102** is compressed. In these examples, extension of second piston **1118** and/or first piston **1116** may cause gas **1210** to expand such that a pressure within inner chamber **1124** is reduced. The pressure in inner chamber **1124** may be reduced to a level below the pressure in cavity **1126.** Consequently, any gas **1210** and/or any hydraulic liquid **1212** in cavity **1126** may be expelled from cavity **1126,** having a higher pressure, into inner chamber **1124,** having a lower pressure, through tube **1128.**

**Figure 13** is an illustration of actuator **1102** in a retracted position, depicted in accordance with an illustrative embodiment. In this illustrative example, actuator **1102** has retracted position **1300.** In particular, third piston **1120** has retracted position **1202,** first piston **1116** has retracted position **1204,** and second piston **1118** is fully extended when actuator **1102** has retracted position **1300.**

Actuator **1102** may be configured to have retracted position **1300** when actuator **1102** is to be in a landing position and/or a locked position. Actuator **1102** may be in a landing position when, for example, the aircraft has prepared the landing gear for landing onto the ground. Actuator **1102** may be in a locked position when, for example, the aircraft is traveling on a runway in preparation for takeoff.

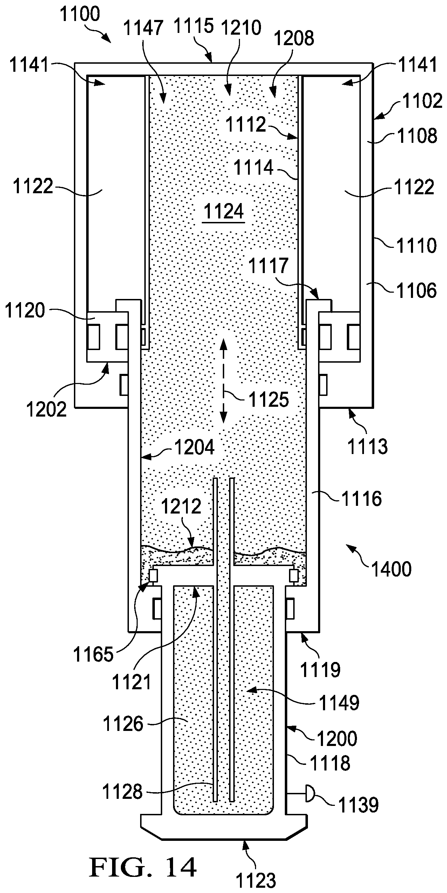

**Figure 14** is an illustration of actuator **1102** in a fully extended position depicted in accordance with an illustrative embodiment. In this illustrative example, actuator **1102** is considered to be in fully extended position **1400.** In particular, both first piston **1116** and second piston **1118** are fully extended when actuator **1102** is in fully extended position **1400.**

Actuator **1102** may be in fully extended position **1400** when the amount and/or pressure of first fluid **1206** from **Figures 12-13** in second sub-chamber **1143** of outer chamber **1122** has been reduced such that pressure of second fluid **1208** forces gas **1210** to expand, first piston **1116** and second piston **1118** to extend, and third piston **1120** to move downwards.

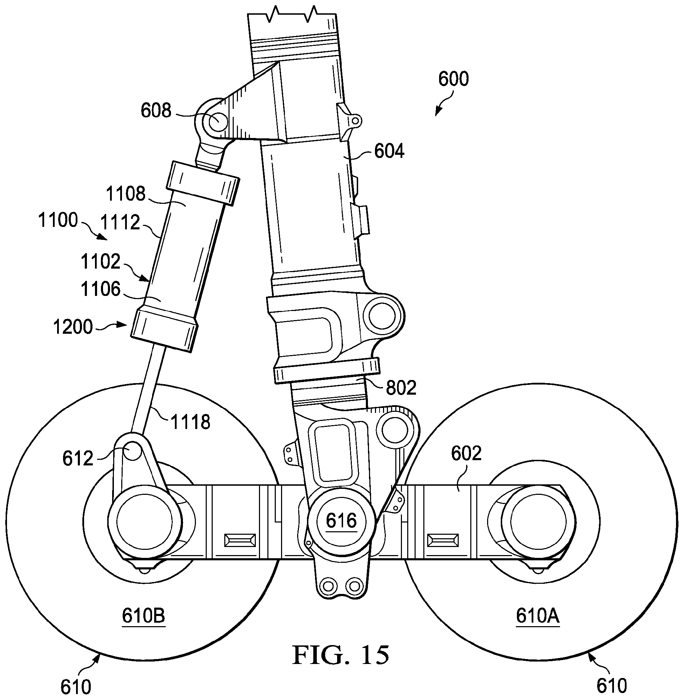

**Figure 15** is an illustration of a landing gear assembly with an actuator in a compressed position depicted in accordance with an illustrative embodiment. In this illustrative example, landing gear assembly **600** from **Figure 6** is depicted having hydraulic strut assembly **1100** from **Figure 11** instead of hydraulic strut **606** in **Figure 6****.** Manifold **1104** for hydraulic strut assembly **1100** may not be seen in this view. As depicted, landing gear assembly **600** is in a ground position. In this ground position, actuator **1102** has compressed position **1200** from **Figure 12****.**

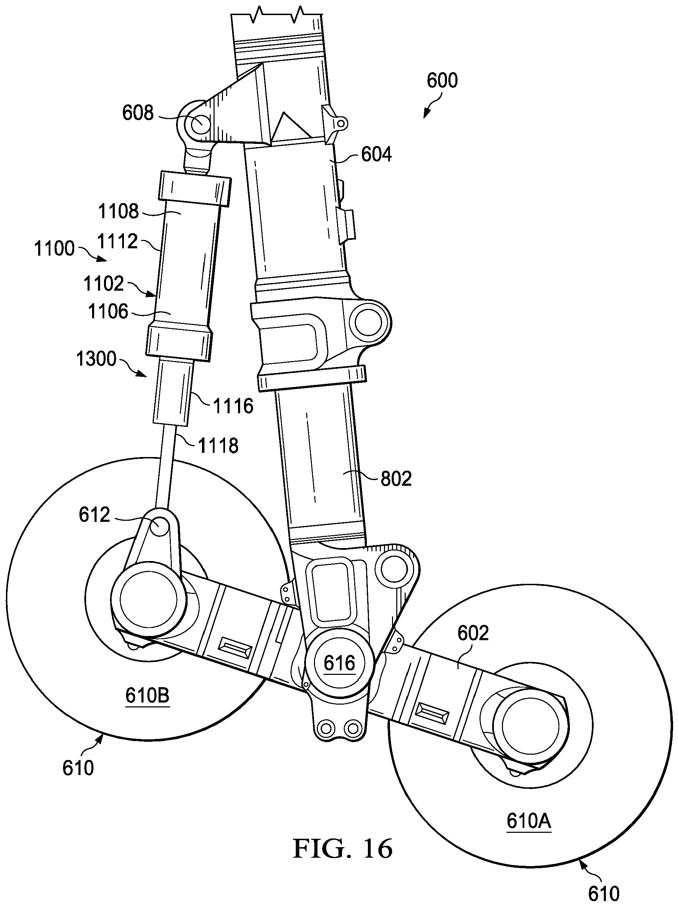

**Figure 16** is an illustration of a landing gear assembly with an actuator in a retracted position depicted in accordance with an illustrative embodiment. In this illustrative example, landing gear assembly **600** from **Figure 8** is depicted having hydraulic strut assembly **1100** from **Figure 11** instead of hydraulic strut **606** in **Figure 8****.** As depicted, landing gear assembly **600** is in a landing position. In this landing position, actuator **1102** has retracted position **1300** from **Figure 13****.**

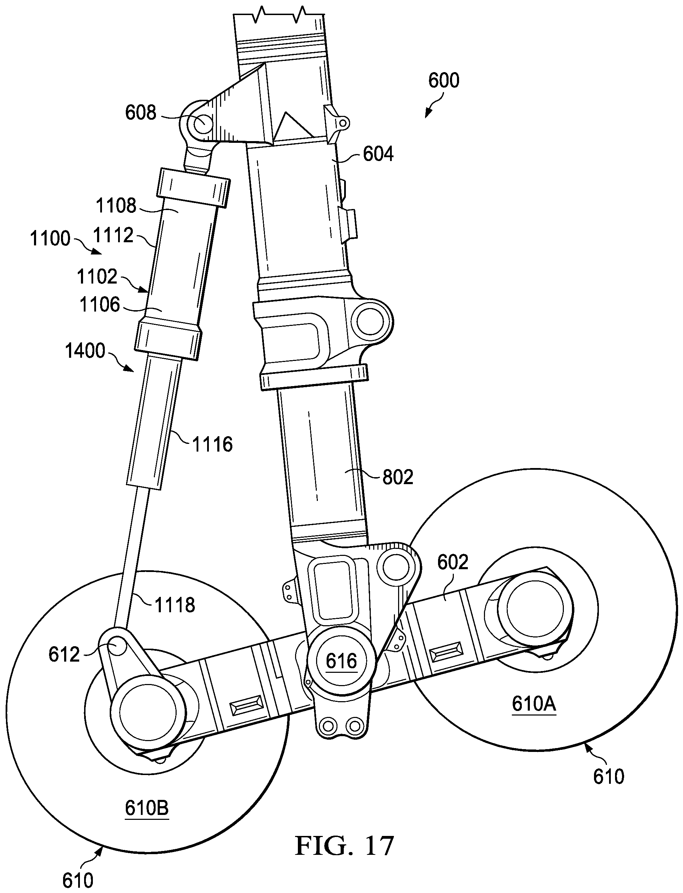

**Figure 17** is an illustration of a landing gear assembly with an actuator in a fully extended position depicted in accordance with an illustrative embodiment. In this illustrative example, landing gear assembly **600** from **Figure 7** is depicted having hydraulic strut assembly **1100** from **Figure 11** instead of hydraulic strut **606** in **Figure 7****.** As depicted, landing gear assembly **600** is in a stow position. In this stow position, actuator **1102** has fully extended position **1400** from **Figure 14****.**

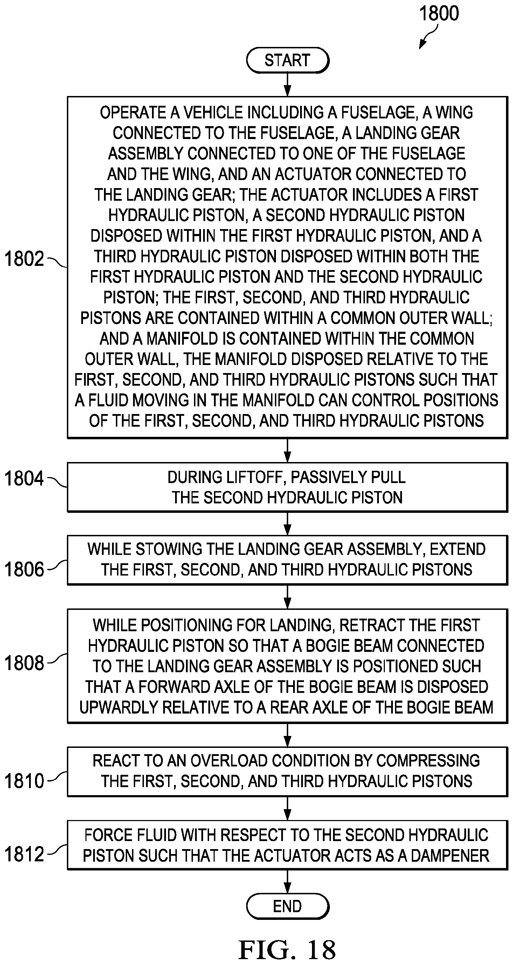

**Figure 18** is an illustration of a flowchart of a method of operating a hydraulic actuator in an aircraft, in accordance with an illustrative embodiment. The process shown in **Figure 18** may be implemented using a hydraulic actuator assembly **200,** such as that shown in **Figure 2** through **Figure 5****,** or may be implemented using a hydraulic strut **606,** such as that shown in **Figures 6** through **8****.**

The process **1800** begins by operating a vehicle, the vehicle comprising: a fuselage; a wing connected to the fuselage; a landing gear assembly connected to one of the fuselage and the wing; an actuator connected to the landing gear assembly, wherein the actuator comprises: a first hydraulic piston; a second hydraulic piston disposed within the first hydraulic piston; and a third hydraulic piston disposed within both the first hydraulic piston and the second hydraulic piston, wherein the first, second, and third hydraulic pistons are contained within a common outer wall; and a manifold is contained within the common outer wall, the manifold disposed relative to the first, second, and third hydraulic pistons such that a fluid moving in the manifold can control positions of the first, second, and third hydraulic pistons (operation **1802**). In an illustrative embodiment the method may include, during liftoff, passively pulling the second hydraulic piston (operation **1804**). In an illustrative embodiment, the method may further include, while stowing the landing gear assembly, extending the first, second, and third hydraulic pistons (operation **1806**).

In an illustrative embodiment, the method may further include, while positioning for landing, retracting the first hydraulic piston so that a bogie beam connected to the landing gear assembly is positioned such that a forward axle of the bogie beam is disposed upwardly relative to a rear axle of the bogie beam (operation **1808**). In an illustrative embodiment, the method may further include reacting to an overload condition by compressing the first, second, and third hydraulic pistons (operation **1810**). In an illustrative embodiment, the method may further include forcing fluid with respect to the second hydraulic piston such that the actuator acts as a dampener (operation **1812**). The process terminates thereafter.

Thus, the illustrative embodiments provide for an actuator. The actuator includes a first hydraulic piston, a second hydraulic piston disposed within the first hydraulic piston, and a third hydraulic piston disposed within both the first hydraulic piston and the second hydraulic piston. The first, second, and third hydraulic pistons are contained within a common outer wall.

The illustrative embodiments present provide for a nested piston actuator that is flexible, durable, light weight, and relatively inexpensive compared to other actuators. Additionally, the illustrative embodiments have added further value to aircraft operation in that the illustrative embodiments aid an aircraft in both landing and lift off. The illustrative embodiments aid an aircraft to lift off by increasing the height of the landing gear assembly at the time of initial take-off rotation, which allows a higher angle of attack. Other illustrative embodiments are apparent from the following additional description.

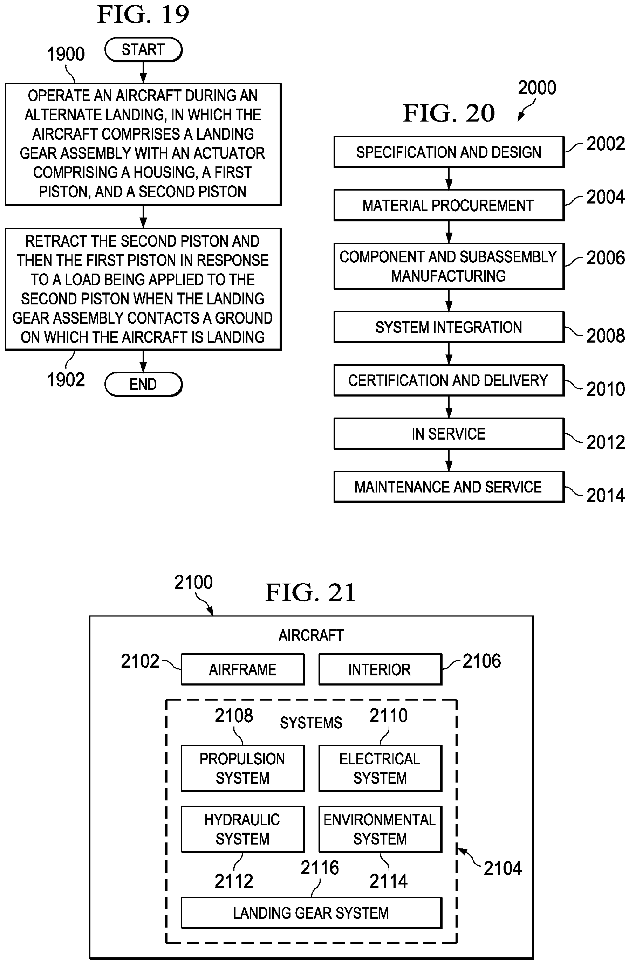

**Figure 19** is an illustration of a process for operating a vehicle during an alternate landing in the form of a flowchart depicted in accordance with an illustrative embodiment. The process described in **Figure 19** may be implemented using hydraulic strut assembly **1000** in **Figure 10****.** For example, this process may be used to operate aircraft **1004** in **Figure 10** when aircraft **1004** performs an alternate landing.

The process begins by operating the aircraft during an alternate landing in which the aircraft comprises a landing gear assembly with an actuator comprising a housing, a first piston, and a second piston (operation **1900**). During an alternate landing, the landing gear assembly for the aircraft may be in a stow position. In particular, the actuator in the landing gear assembly may be in a fully extended position.

In this illustrative example, the housing of the actuator comprises an outer cylindrical structure and an inner cylindrical structure. The outer cylindrical structure and the inner cylindrical structure form an outer chamber configured to receive a first fluid. The first piston is configured to move in a direction parallel to an axis through the housing relative to a first end of the housing.

Further, the second piston is configured to move in the direction parallel to the axis through the housing relative to a second end of the first piston such that a volume of an inner chamber formed by the inner cylindrical structure and the second piston changes. The inner chamber is configured to hold a second fluid in which the second fluid comprises a gas that is compressible.

Thereafter, the process retracts the second piston and then the first piston in response to a load being applied to the second piston when the landing gear assembly contacts a ground on which the aircraft is landing (operation **1902**). The gas in the inner chamber compresses when the second piston and the first piston retract. In operation **1902,** the gas allows the second piston and the first piston to be retracted when the aircraft touches the ground during the alternate landing. Further, with the compressible gas in the inner chamber, the second fluid that is present in the inner chamber is not expelled from the inner chamber during the retraction of the second piston and the first piston.

The flowcharts and block diagrams in the different depicted illustrative embodiments illustrate the architecture, functionality, and operation of some possible implementations of apparatus and methods in different illustrative embodiments. In this regard, each block in the flowchart or block diagrams may represent a module, segment, function, and/or a portion of an operation or step. The illustrative embodiments may be manufactured or configured to perform one or more operations in the flowcharts or block diagrams.

In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved. Also, other blocks may be added in addition to the illustrated blocks in a flowchart or block diagram.

Illustrative embodiments of the disclosure may be described in the context of aircraft manufacturing and service method **2000** as shown in **Figure 20** and aircraft **2100** as shown in **Figure 21****.** Turning first to **Figure 20****,** an illustration of an aircraft manufacturing and service method is depicted in accordance with an illustrative embodiment. During pre-production, aircraft manufacturing and service method **2000** may include specification and design **2002** of aircraft **2100** in **Figure 21** and material procurement **2004.**

During production, component and subassembly manufacturing **2006** and system integration **2008** of aircraft **2100** in **Figure 21** takes place. Thereafter, aircraft **2100** in **Figure 21** may go through certification and delivery **2010** in order to be placed in service **2012.** While in service **2012** by an operator, aircraft **2100** in **Figure 21** is scheduled for routine maintenance and service **2014,** which may include modification, reconfiguration, refurbishment, and other maintenance or service.

Each of the processes of aircraft manufacturing and service method **2000** may be performed or carried out by a system integrator, a third party, and/or an operator. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 21****,** an illustration of an aircraft is depicted in which an illustrative embodiment may be implemented. In this example, aircraft **2100** is produced by aircraft manufacturing and service method **2000** in **Figure 20** and may include airframe **2102** with plurality of systems **2104** and interior **2106.** Examples of systems **2104** include one or more of propulsion system **2108,** electrical system **2110,** hydraulic system **2112,** environmental system **2114,** and landing gear system **2116.** Landing gear system **2116** may include one or more landing gear assemblies such as, for example, without limitation, landing gear assembly **108** in **Figure 1****,** landing gear assembly **600** in **Figures** 6 through 8, landing gear **902** in **Figure 9****,** landing gear assembly **1002** in **Figure 10****,** or landing gear assembly **600** in **Figures 16** through 17. Any number of other systems may be included in systems **2104,** depending on the implementation.

Apparatus and methods embodied herein may be employed during at least one of the stages of aircraft manufacturing and service method **2000** in **Figure 20****.** For example, actuator **110** in **Figure 1****,** hydraulic actuator assembly **200** in **Figures 2** through **5****,** hydraulic strut **606** in **Figures 6** through **8****,** actuator **910** in **Figure 9****,** or hydraulic strut assembly **1000** may be formed and added to landing gear system **2116** for aircraft **2100** during at least one of component and subassembly manufacturing **2206,** system integration **2208,** and maintenance and service **2014.**

In one illustrative example, components or subassemblies produced in component and subassembly manufacturing **2006** in **Figure 20** may be fabricated or manufactured in a manner similar to components or subassemblies produced while aircraft **2100** is in service **2012** in **Figure 20****.** As yet another example, one or more apparatus embodiments, method embodiments, or a combination thereof may be utilized during production stages, such as component and subassembly manufacturing **2006** and system integration **2008** in **Figure 20****.** One or more apparatus embodiments, method embodiments, or a combination thereof may be utilized while aircraft **2100** is in service **2012** and/or during maintenance and service **2014** in **Figure 20****.** The use of a number of the different illustrative embodiments may substantially expedite the assembly of and/or reduce the cost of aircraft **2100.**

As used herein, the phrase "at least one of", when used with a list of items, means that different combinations of one or more of the listed items may be used and only one of each item in the list may be needed. For example, "at least one of item A, item B, and item C" may include, for example, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

Thus, the illustrative embodiments provide for a guide tube and a floating piston disposed within the guide tube. The floating piston is configured within the guide tube such that a landing gear connected to the floating piston may extend rapidly to the stow position relative to a mechanical device for retracting a landing gear.

The illustrative embodiments also provide for an actuator including a first hydraulic piston, a second hydraulic piston disposed within the first hydraulic piston, and a third hydraulic piston disposed within both the first hydraulic piston and the second hydraulic piston. The first, second, and third hydraulic pistons are contained within a common outer wall. A manifold is connected to the first, second, and third hydraulic pistons. The manifold is disposed relative to the first, second, and third hydraulic pistons such that a fluid moving in the manifold can control positions of the first, second, and third hydraulic pistons.

The embodiments also provide for a vehicle including a fuselage, a wing connected to the fuselage, and a landing gear assembly connected to at least one of the fuselage and the wing. The vehicle further includes a hydraulic actuator connected to the landing gear assembly. The hydraulic actuator includes a first hydraulic piston, a second hydraulic piston disposed within the first hydraulic piston, and a third hydraulic piston disposed within both the first hydraulic piston and the second hydraulic piston. The first, second, and third hydraulic pistons are contained within a common outer wall. The hydraulic actuator further includes a manifold connected to the first, second, and third hydraulic pistons. The manifold is disposed relative to the first, second, and third hydraulic pistons such that a fluid moving in the manifold can control positions of the first, second, and third hydraulic pistons.

The embodiments also provide for a method for operating a vehicle. The vehicle includes a fuselage, a wing connected to the fuselage, and a landing gear assembly connected to one of the fuselage or the wing. An actuator is connected to the landing gear assembly. The actuator includes a first hydraulic piston, a second hydraulic piston disposed within the first hydraulic piston, and a third hydraulic piston disposed within both the first hydraulic piston and the second hydraulic piston. The first, second, and third hydraulic pistons are contained within a common outer wall. A manifold is connected to the first, second, and third hydraulic pistons. The manifold is disposed relative to the first, second, and third hydraulic pistons such that a fluid moving in the manifold can control positions of the first, second, and third hydraulic pistons.

Further, the different illustrative embodiments provide a hydraulic actuator, such as actuator **1001** in **Figure 10****,** configured to use a compressible gas that may not need to be expelled from the hydraulic actuator when the hydraulic actuator is rapidly compressed during an alternate landing. In one illustrative embodiment, a hydraulic strut assembly comprises a housing, a first piston, a second piston, and a third piston. The housing comprises outer and inner cylindrical structures. An outer chamber is configured to receive a first fluid that is formed between the outer cylindrical structure and the inner cylindrical structure. The first piston is positioned between the outer and inner cylindrical structures. The second piston is nested within the first piston. The inner cylindrical structure, the first piston, and the second piston form an inner chamber in which a volume of the inner chamber changes when at least one of the first and second pistons move. The inner chamber is configured to hold a second fluid comprising a gas. The third piston is positioned between the outer cylindrical structure and the first piston. The first, second, and third pistons are configured to move in a direction parallel to an axis through the housing.

The telescopic feature of the actuator in the telescopic hydraulic strut assembly provided by the different illustrative embodiments allows for a smaller overall package than the currently available and/or proposed systems. The valves within the manifold are configured to control pressure within the actuator, thereby allowing the telescopic hydraulic strut assembly to serve multiple functions. The more compact design has reduced weight as compared to currently available systems and may be used on aircraft landing gears that do not have sufficient space for some of the currently available semi-levered gear systems.

The actuator provided by the different illustrative embodiments comprises a fixed outer housing assembly with one closed end, the head end, one open end, and the rod end that houses three moveable pistons. The outer cylinder structure of the actuator is pivotally connected to the upper portion of the landing gear shock strut. One of the three pistons, the second piston, is pivotally connected to the forward end of the bogie beam of the landing gear. The three pistons slide axially within the outer housing. Movement of the piston may be controlled by the movement of fluids in or out of the actuator, as controlled by the valve module, or by the landing gear as it pushes or pulls against the attachment ends of the actuator. The valve manifold, when connected to a pressurized hydraulic fluid delivery system, will control fluid flow in and out of the actuator with the use of electrically commanded solenoid control valves, pressure reducing valves, pressure relief valves, and/or check valves.

In another illustrative embodiment, the hydraulic strut assembly comprises a housing, a first piston, a second piston, and a third piston. The housing comprises an outer cylindrical structure and an inner cylindrical structure. The inner cylindrical structure, the first piston, and the second piston form an inner chamber configured to hold a fluid comprising a gas and a hydraulic liquid. The inner chamber may have a first sub-chamber and a second sub-chamber. The gas is compressible such that at least one of the first piston and the second piston may be retracted without expelling the second fluid from the inner chamber.

Further, the hydraulic strut assembly may also include a seal system associated with at least one of the first piston and the second piston. The seal system may be configured to divide the first sub-chamber of the inner chamber into a first portion and a second portion and provide a seal between the first portion and the second portion of the first sub-chamber when the second piston retracts. When a volume of the first portion of the first sub-chamber increases and a volume of the second portion of the second sub-chamber decreases in response to the second piston extending, the hydraulic liquid of the second fluid may be moved past the seal system to provide resistance to the movement of the second piston. Additionally, the hydraulic liquid may provide lubrication for the seal system.

In one illustrative embodiment, the actuator is fully extended to position the landing gear bogie beam in a configuration with the forward axle lower than the aft axle, such as actuator **1102** in fully extended position **1400** in **Figure 14** and **Figure 17****.** This position may facilitate stowage of the landing gear within an aircraft wheel well. The actuator achieves the fully extended position when the control valves open the outer chambers to the external hydraulic fluid return system. The inner chamber contains a compressible mixture of fluid that is charged to a predetermined pressure during maintenance of the hydraulic strut assembly. The pressure within the inner chamber forces the movement of the pistons to extend. Extension rate of the pistons is controlled by a variable restriction of the fluid that is expelled from the outer chamber of the actuator.

In another illustrative embodiment, the actuator is partially retracted to position the landing gear bogie beam in a configuration with the forward axle higher than the aft axle, such as actuator **1102** in retracted position **1300** in **Figure 13** and **Figure 16****.** This position may position the bogie beam in the optimum touchdown configuration. The actuator achieves the partially retracted position when the manifold provides control of hydraulic fluid to and from the outer chambers. This action retracts the first and third pistons. The inner chamber contains a compressible fluid that is charged to a predetermined pressure during maintenance of the hydraulic strut assembly. The pressure within the inner chamber forces the movement of the second piston to extend.

The semi-levered function is enabled by forcibly holding the third piston retracted against the outer housing and thereby preventing the extension of the first and third pistons as the aircraft rotates for takeoff and the landing gear bogie beam tries to rotate the forward axle away from the aircraft reference. This motion will attempt to extend the actuator pistons. With highly pressurized hydraulic fluid applied by the control valves to the outer chamber, the fluid acts against the area of the third piston to resist the pulling force of the bogie beam and prevent extension of the first and third pistons. A pressure relief valve prevents over-pressurization of the fluid in the outer chamber.

In one illustrative embodiment, the aircraft is situated with all tires on the ground and the actuator position is controlled by the landing gear. The actuator may be in a compressed position, such as actuator **1102** in compressed position **1200** in **Figure 12** and **Figure 15****.** The actuator length may be influenced by the angle of the bogie beam with respect to the landing gear shock strut and the extension amount of the landing gear shock strut. The desired response from the actuator in this condition is to minimize unequal load distribution on the tires and provide a resistive force that dampens rotations of the bogie beam. The pressure of the compressible fluid within the inner chamber and the pressure of the hydraulic fluid within the outer chambers are controlled to provide such motive force acting on the pistons to affect an insignificantly unbalanced load distribution on the tires. Another desired response from the actuator in this condition is to affect damping of the bogie beam rotations. To dampen bogie beam rotation, the fluid in the inner chamber is forced thru a fluid flow restricting device as the second piston is extended. Additionally, the inner chamber is partially filled with compressible gas and partially filled with hydraulic liquid.

The actuator provided by the different illustrative embodiments, such as actuator **1001** in **Figure 10** and actuator **1102** in **Figures 11-17****,** provides a dampening effect on the bogie beam during touchdown of the aircraft. Touchdown can cause rapid rotation of the bogie beam and therefore very rapid linear motion of the actuator pistons. A routine touchdown will affect extension of the first and third pistons that will force hydraulic fluid through a restrictive passage and resist motion of the bogie beam. A non-routine, or alternate, touchdown will affect compression of the first and second pistons that will compress the gas within the first fluid chamber. A mechanical spring placed between the first and second pistons provides control of accelerations during contact between the pistons.

The telescopic hydraulic strut assembly described by the different illustrative embodiments provides different types of functionality when installed on a conventional multi-axle landing gear and during typical operation of an aircraft. In particular, the telescopic hydraulic strut assembly described by the different illustrative embodiments provides the ability to position the bogie beam in two positions while the aircraft is in flight. The first position is for stowage of the landing gear within a wheel well, and the other position is a position appropriate for landing the aircraft.

Further, the telescopic hydraulic strut assembly described by the different illustrative embodiments provides the ability to inhibit extension of the actuator, known as lock-up, and hold the forward axle of the bogie beam at a constant distance from the aircraft reference, thereby causing the bogie beam to pivot about the forwardly located attachment of the telescopic hydraulic strut as the landing gear shock strut extends during takeoff. This effectively lengthens the main landing gear during takeoff.

Additionally, the telescopic hydraulic strut assembly described by the different illustrative embodiments provides the ability to deactivate the semi-levered landing gear functions when desired to ensure equal tire loading, maximum braking capability, and optimum damping performance. Still further, the telescopic hydraulic strut assembly described by the different illustrative embodiments provides the ability to dampen rotations of the bogie beam upon touchdown and taxiing.

According to an aspect of the present disclosure there is provided an actuator for use in a hydraulic strut assembly, the actuator comprising a housing comprising an outer cylindrical structure and an inner cylindrical structure, a first piston positioned between the outer cylindrical structure and the inner cylindrical structure, wherein an outer chamber configured to receive a first fluid is formed between the outer cylindrical structure, the inner cylindrical structure, and the first piston in which the first fluid comprises a hydraulic liquid, a second piston nested within the first piston, wherein the inner cylindrical structure, the first piston, and the second piston form an inner chamber in which a volume of the inner chamber changes when at least one of the first piston and the second piston move and in which the inner chamber is configured to hold a second fluid comprising the hydraulic liquid and a gas and a third piston positioned between the outer cylindrical structure and the first piston, wherein the first piston, the second piston and the third piston are configured to move in a direction parallel to an axis through the housing.

Advantageously at least one of the first piston and the second piston are configured to move such that the gas in the inner chamber compresses as the volume of the inner chamber is reduced. Advantageously the actuator further comprises an elongate member associated with the second piston, wherein the elongate member is configured to connect a first sub-chamber of the inner chamber to a second sub-chamber of the inner chamber in which the second sub-chamber of the inner chamber is formed by a cavity within the second piston. Advantageously the the third piston is configured to divide the outer chamber into a first sub-chamber and a second sub-chamber and wherein movement of the third piston changes a volume of the first sub-chamber and a volume of the second sub-chamber.

The description of the different illustrative embodiments has been presented for purposes of illustration and description, and is not intended to be exhaustive or limited to the illustrative embodiments in the form disclosed. Many modifications and variations will be apparent to those of ordinary skill in the art.

Further, different illustrative embodiments may provide different features as compared to other illustrative embodiments. The illustrative embodiment or embodiments selected are chosen and described in order to best explain the principles of the illustrative embodiments, the practical application, and to enable others of ordinary skill in the art to understand the disclosure for various illustrative embodiments with various modifications as are suited to the particular use contemplated.

## Claims

1. A hydraulic assembly comprising:
a housing (1006) comprising an outer cylindrical structure (1014) and an inner cylindrical structure (1016);
a first piston (1008) positioned between the outer cylindrical structure (1014) and the inner cylindrical structure (1016), wherein an outer chamber (1048) configured to receive a first fluid (1038) is formed between the outer cylindrical structure (1014), the inner cylindrical structure (1016), and the first piston (1008);
a second piston (1010) nested within the first piston (1008), wherein the inner cylindrical structure (1016), the first piston (1008), and the second piston (1010) form an inner chamber (1050) in which a volume of the inner chamber (1050) changes when at least one of the first piston (1008) and the second piston (1010) move and in which the inner chamber (1050) is configured to hold a second fluid (1208) comprising a gas (1044); and
a third piston (1012) positioned between the outer cylindrical structure (1014) and the first piston (1008), wherein the first piston (1008), the second piston (1010) and the third piston (1012) are configured to move in a direction parallel to an axis through the housing (1006).

2. The hydraulic assembly of claim 1, wherein at least one of the first piston (1008) and the second piston (1010) are configured to move such that the gas (1044) in the inner chamber (1050) compresses as the volume of the inner chamber (1050) is reduced.

3. The hydraulic assembly of claims 1 and 2 further comprising:
an elongate member (1052) associated with the second piston (1010), wherein the elongate member (1052) is configured to connect a first sub-chamber (1141) of the inner chamber (1050) to a second sub-chamber (1143) of the inner chamber (1050) in which the second sub-chamber (1143) of the inner chamber (1050) is formed by a cavity (1126) within the second piston (1010) and wherein the elongate member (1052) is configured to draw any hydraulic liquid that is part of the second fluid (1208) from the second sub-chamber (1143) into the first sub-chamber (1141) when at least one of the second piston (1010) and the first piston (1008) extends.

4. The hydraulic assembly in any of claims 1-3, wherein the third piston (1012) is configured to divide the outer chamber (1048) into a first sub-chamber (1141) and a second sub-chamber (1143) and wherein movement of the third piston (1012) changes a volume of the first sub-chamber (1141) and a volume of the second sub-chamber (1143).

5. The hydraulic assembly of claim 4 further comprising:
a manifold (1104), wherein the first fluid (1038) is configured to flow into the second sub-chamber (1143) of the outer chamber (1048) from the manifold (1104) and wherein the first fluid (1038) is configured to return to the manifold (1104) from the first sub-chamber (1141) of the outer chamber (1048).

6. The hydraulic assembly of claim 5, wherein the manifold (1104) comprises:
a plurality of channels (1131) configured to allow the first fluid (1038) to flow through the manifold (1104); and
a plurality of valves (1133) configured to control flow of the first fluid (1038) from the manifold (1104) into the second sub-chamber (1143) of the outer chamber (1048) and from the first sub-chamber (1141) of the outer chamber (1048) into the manifold (1104).

7. The hydraulic assembly of claim 6, wherein the plurality of valves (1133) comprises:
a multi-mode pressure-reducing valve;
a first solenoid shut-off valve;
a second solenoid shut-off valve; and
a multi-mode pressure-relief valve.

8. The hydraulic assembly in any of claims 1-7 further comprising:
a spring system (1127) associated with at least one of the first piston (1008) and the second piston (1010), wherein the spring system (1127) is configured to compress in response to a load applied to the spring system (1127).

9. The hydraulic assembly in any of claims 1-8, wherein the inner chamber (1050) is divided into a first sub-chamber (1141) and a second sub-chamber (1143) and further comprising:
a seal system (1165) associated with at least one of the first piston (1008) and the second piston (1010), wherein the seal system (1165) is configured to divide the first sub-chamber (1141) of the inner chamber (1050) into a first portion and a second portion and wherein the seal system (1165) provides a seal between the first portion and the second portion of the first sub-chamber (1141) when the second piston (1010) retracts.

10. The hydraulic assembly of claim 9, wherein the second fluid (1208) comprises the gas (1044) and a hydraulic liquid and wherein a volume of the first portion of the first sub-chamber (1141) increases and a volume of the second portion of the second sub-chamber (1143) decreases in response to the second piston (1010) extending such that the hydraulic liquid is forced past the seal system (1165) to provide resistance to movement of the second piston (1010).

11. The hydraulic assembly of claim 10, wherein the hydraulic liquid is configured to lubricate the seal system (1165).

12. The hydraulic assembly in any of claims 1-11, wherein the first fluid (1038) comprises a hydraulic liquid and the second fluid (1208) comprises the gas (1044) and the hydraulic liquid in which the gas (1044) is compressible.

13. The hydraulic assembly in any of claims 1-12, wherein the housing (1006), the first piston (1008), the second piston (1010), and the third piston (1012) form an actuator in the hydraulic assembly and wherein the actuator is configured to have a position selected from one of a compressed position, a retracted position, and a fully extended position.

14. A method for operating an actuator, the method comprising:
operating the actuator, wherein the actuator comprises the features as disclosed in claim 1, and further retracting the second piston (1010) and the first piston (1008) in response to a load being applied to the second piston (1010), wherein the gas (1044) in the inner chamber (1050) compresses when the second piston (1010) retracts.

15. The method of claim 14, wherein the step of retracting the second piston (1010) and the first piston (1008) in response to the load being applied to the second piston (1010) further comprises:
retracting the second piston (1010) and the first piston (1008) in response to the load being applied to the second piston (1010) such that the actuator changes from a fully extended position to a compressed position, wherein the first piston (1008) and the second piston (1010) compress the gas (1044) that is in the inner chamber (1050).

## Patentansprüche

1. Hydraulikanordnung mit:
einem Gehäuse (1006), das eine äußere Zylinderstruktur (1014) und eine innere Zylinderstruktur (1016) umfasst;
einem ersten Kolben (1008), der zwischen der äußeren Zylinderstruktur (1014) und der inneren Zylinderstruktur (1016) positioniert ist, wobei eine zum Aufnehmen eines ersten Fluids (1038) konfigurierte äußere Kammer (1048) zwischen der äußeren Zylinderstruktur (1014), der inneren Zylinderstruktur (1016) und dem ersten Kolben (1008) gebildet ist;
ein zweiter Kolben (1010) in den ersten Kolben (1008) geschachtelt ist, wobei die innere Zylinderstruktur (1016), der erste Kolben (1008) und der zweite Kolben (1010) eine innere Kammer (1050) bilden, wobei sich ein Volumen der inneren Kammer (1050) ändert, wenn der erste Kolben (1008) und/oder der zweite Kolben (1010) sich bewegt, und wobei die innere Kammer (1050) konfiguriert ist, um ein zweites Fluid (1208) aufzunehmen, welches ein Gas (1044) umfasst; und
einem dritten Kolben (1012), der zwischen der äußeren Zylinderstruktur (1014) und dem ersten Kolben (1008) positioniert ist,
wobei der erste Kolben (1008), der zweite Kolben (1010) und der dritte Kolben (1012) konfiguriert sind, um sich in einer zu einer Achse parallelen Richtung durch das Gehäuse (1006) zu bewegen.

2. Hydraulikanordnung nach Anspruch 1, bei der der erste Kolben (1008) und/oder der zweite Kolben (1010) konfiguriert ist, um sich so zu bewegen, dass das Gas (1044) in der inneren Kammer (1050) komprimiert wird, wenn das Volumen der inneren Kammer (1050) verringert wird.

3. Hydraulikanordnung nach Anspruch 1 und 2, ferner mit:
einem langgestreckten Element (1052), das dem zweiten Kolben (1010) zugeordnet ist, wobei das langgestreckte Element (1052) konfiguriert ist, um eine erste Teilkammer (1141) der inneren Kammer (1050) mit einer zweiten Teilkammer (1143) der inneren Kammer (1050) zu verbinden, wobei die zweite Teilkammer (1143) der inneren Kammer (1050) durch einen Hohlraum (1126) im zweiten Kolben (1010) gebildet ist und wobei das langgestreckte Element (1052) konfiguriert ist, um eine Hydraulikflüssigkeit, die Teil des zweiten Fluids (1208) ist, von der zweiten Teilkammer (1143) in die erste Teilkammer (1141) zu ziehen, wenn sich der zweite Kolben (1010) und/oder der erste Kolben (1008) ausdehnt.

4. Hydraulikanordnung nach einem der Ansprüche 1 bis 3, bei der der dritte Kolben (1012) konfiguriert ist, um die äußere Kammer (1048) in eine erste Teilkammer (1141) und eine zweite Teilkammer (1143) zu unterteilen, und wobei eine Bewegung des dritten Kolbens (1012) ein Volumen der ersten Teilkammer (1141) und ein Volumen der zweiten Teilkammer (1143) verändert.

5. Hydraulikanordnung nach Anspruch 4, ferner mit einem Verteiler (1104), wobei das erste Fluid (1038) konfiguriert ist, um vom Verteiler (1104) in die zweite Teilkammer (1143) der äußeren Kammer (1048) zu fließen, und das erste Fluid (1038) konfiguriert ist, um aus der ersten Teilkammer (1141) der äußeren Kammer (1048) zum Verteiler (1104) zurückzufließen.

6. Hydraulikanordnung nach Anspruch 5, bei der der Verteiler (1104) umfasst:
eine Mehrzahl von Kanälen (1131), die konfiguriert sind, um das erste Fluid (1038) durch den Verteiler (1104) fließen zu lassen; und
eine Mehrzahl von Ventilen (1133), die konfiguriert sind, um den Fluss des ersten Fluids (1038) vom Verteiler (1104) in die zweite Teilkammer (1143) der äußeren Kammer (1048) und von der ersten Teilkammer (1141) der äußeren Kammer (1048) in den Verteiler (1104) zu steuern.

7. Hydraulikanordnung nach Anspruch 6, bei der die Mehrzahl von Ventilen (1133) umfasst:
ein Multimode-Druckreduzierventil;
ein erstes Absperrmagnetventil;
ein zweites Absperrmagnetventil; und
ein Multimode-Druckbegrenzungsventil.

8. Hydraulikanordnung nach einem der Ansprüche 1 bis 7, ferner mit
einem Federsystem (1127), das dem ersten Kolben (1008) und/oder dem zweiten Kolben (1010) zugeordnet ist, wobei das Federsystem (1127) konfiguriert ist, in Reaktion auf eine auf das Federsystem (1127) wirkende Last gestaucht zu werden.

9. Hydraulikanordnung nach einem der Ansprüche 1 bis 8, bei der die innere Kammer (1050) in eine erste Teilkammer (1141) und eine zweite Teilkammer (1143) unterteilt ist, ferner mit:
einem Dichtungssystem (1165), das dem ersten Kolben (1008) und/oder dem zweiten Kolben (1010) zugeordnet ist, wobei das Dichtungssystem (1165) konfiguriert ist, um die erste Teilkammer (1141) der inneren Kammer (1050) in einen ersten Abschnitt und einen zweiten Abschnitt zu unterteilen, und das Dichtungssystem (1165) eine Dichtung zwischen dem ersten Abschnitt und dem zweiten Abschnitt herstellt, wenn sich der zweite Kolben (1010) zurückzieht.

10. Hydraulikanordnung nach Anspruch 9, bei der das zweite Fluid (1208) das Gas (1044) und eine Hydraulikflüssigkeit umfasst und in Reaktion auf ein Ausstrecken des zweiten Kolbens (1010) ein Volumen des ersten Abschnitts der ersten Teilkammer (1141) zunimmt und ein Volumen des zweiten Abschnitts der zweiten Teilkammer (1143) abnimmt, so dass die Hydraulikflüssigkeit am Dichtungssystem (1165) vorbeigezwungen wird, um einen Widerstand gegen eine Bewegung des zweiten Kolbens (1010) herzustellen.

11. Hydraulikanordnung nach Anspruch 10, bei der die Hydraulikflüssigkeit konfiguriert ist, um das Dichtungssystem (1165) zu schmieren.

12. Hydraulikanordnung nach einem der Ansprüche 1 bis 11, bei der das erste Fluid (1038) eine Hydraulikflüssigkeit umfasst und das zweite Fluid (1208) das Gas (1044) und die Hydraulikflüssigkeit umfasst, in der das Gas (1044) komprimierbar ist.

13. Hydraulikanordnung nach einem der Ansprüche 1 bis 12, bei der das Gehäuse (1006), der erste Kolben (1008), der zweite Kolben (1010) und der dritte Kolben (1012) in der Hydraulikanordnung ein Stellglied bilden, und wobei das Stellglied konfiguriert ist, um eine Position einzunehmen, die ausgewählt ist unter einer gestauchten Position, einer zurückgezogenen Position und einer voll ausgestreckten Position.

14. Verfahren zum Betreiben eines Stellglieds, wobei das Verfahren umfasst:
Betreiben des Stellglieds, wobei das Stellglied die Merkmale wie in Anspruch 1 offenbart umfasst, und
Zurückziehen des zweiten Kolbens (1010) und des ersten Kolbens (1008) in Reaktion auf das Einwirken einer Last auf den zweiten Kolben (1010), wobei das Gas (1044) in der inneren Kammer (1050) komprimiert wird, wenn der zweite Kolben (1010) sich zurückzieht.

15. Verfahren nach Anspruch 14, bei dem der Schritt des Zurückziehens des zweiten Kolbens (1010) und des ersten Kolbens (1008) in Reaktion auf das Einwirken einer Last auf den zweiten Kolben (1010) ferner umfasst:
Zurückziehen des zweiten Kolbens (1010) und des ersten Kolbens (1008) in Reaktion auf das Einwirken einer Last auf den zweiten Kolben (1010) derart, dass das Stellglied von einer voll ausgetreckten Position in eine gestauchte Position übergeht, wobei der erste Kolben (1008) und der zweite Kolben (1010) das Gas komprimieren, das sich in der inneren Kammer (1050) befindet.

## Revendications

1. Ensemble hydraulique comprenant :
un boîtier (1006) comprenant une structure cylindrique externe (1014) et une structure cylindrique interne (1016) ;
un premier piston (1008) disposé entre la structure cylindrique externe (1014) et la structure cylindrique interne (1016), une chambre externe (1048) conçue pour recevoir un premier fluide (1038) étant formée entre la structure cylindrique externe (1014), la structure cylindrique interne (1016) et le premier piston (1008) ;
un deuxième piston (1010) imbriqué à l'intérieur du premier piston (1008), la structure cylindrique interne (1016), le premier piston (1008) et le deuxième piston (1010) formant une chambre interne (1050) dans laquelle un volume de la chambre interne (1050) varie lorsqu'au moins un parmi le premier piston (1008) et le deuxième piston (1010) se déplace et dans laquelle la chambre interne (1050) est conçue pour contenir un deuxième fluide (1208) comprenant un gaz (1044) ; et
un troisième piston (1012) disposé entre la structure cylindrique externe (1014) et le premier piston (1008), le premier piston (1008), le deuxième piston (1010) et le troisième piston (1012) étant conçus pour se déplacer dans une direction parallèle à un axe à travers le boîtier (1006).

2. Ensemble hydraulique selon la revendication 1, dans lequel au moins parmi le premier piston (1008) et le deuxième piston (1010) est conçu pour se déplacer de façon à ce que le gaz (1044) dans la chambre interne (1050) se comprime lorsque le volume de la chambre interne (1050) est réduit.

3. Ensemble hydraulique selon les revendications 1 et 2, comprenant en outre :
un élément allongé (1052) associé au deuxième piston (1010), l'élément allongé (1052) étant conçu pour relier une première sous-chambre (1141) de la chambre interne (1050) à une deuxième sous-chambre (1143) de la chambre interne (1050), la deuxième sous-chambre (1143) de la chambre interne (1050) étant formée par une cavité (1126) à l'intérieur du deuxième piston (1010) et l'élément allongé (1052) étant conçu pour aspirer un liquide hydraulique qui fait partie du deuxième fluide (1208) de la deuxième sous-chambre (1143) vers la première sous-chambre (1141) lorsqu'au moins un parmi le deuxième piston (1010) et le deuxième piston (1008) s'étend.

4. Ensemble hydraulique selon l'une des revendications 1 à 3, dans lequel le troisième piston (1012) est conçu pour diviser la chambre externe (1048) en une première sous-chambre (1141) et une deuxième sous-chambre (1143) et dans lequel le mouvement du troisième piston (1012) fait varier un volume de la première sous-chambre (1141) et un volume de la deuxième sous-chambre (1143).

5. Ensemble hydraulique selon la revendication 4, comprenant en outre :
un collecteur (1104), le premier fluide (1038) étant conçu pour s'écouler vers la deuxième sous-chambre (1143) de la chambre externe (1048) à partir du collecteur (1104) et le premier fluide (1038) étant conçu pour retourner vers le collecteur (1104) à partir de la première sous-chambre (1141) de la chambre externe (1048).

6. Ensemble hydraulique selon la revendication 5, dans lequel le collecteur (1104) comprend :
une pluralité de canaux (1131) conçus pour permettre au premier fluide (1038) de s'écouler à travers le collecteur (1104) ; et
une pluralité de vannes (1133) conçues pour contrôler l'écoulement du premier fluide (1038) du collecteur (1104) vers la deuxième sous-chambre (1143) de la chambre externe (1048) et de la première sous-chambre (1141) de la chambre externe (1048) vers le collecteur (1104).

7. Ensemble hydraulique selon la revendication 6, dans lequel la pluralité de vannes (1133) comprennent :
une vanne de réduction de pression multimode ;
une première électrovanne d'arrêt ;
une deuxième électrovanne d'arrêt ; et
une vanne de décompression multimode.

8. Ensemble hydraulique selon l'une des revendications 1 à 7, comprenant en outre :
un système de ressort (1127) associé à au moins un parmi le premier piston (1008) et le deuxième piston (1010), le système de ressort (1127) étant conçu pour comprimer en réponse à une charge appliquée au système de ressort (1127) .

9. Ensemble hydraulique selon l'une des revendications 1 à 8, dans lequel la chambre interne (1050) est divisée en une première sous-chambre (1141) et une deuxième sous-chambre (1143) et comprenant en outre :
un système d'étanchéité (1165) associé à au moins un parmi le premier piston (1008) et le deuxième piston (1010), le système d'étanchéité (1165) étant conçu pour diviser la première sous-chambre (1141) de la chambre interne (1050) en une première portion et une deuxième portion et le système d'étanchéité (1165) permettant une étanchéité entre la première portion et la deuxième portion de la première sous-chambre (1141) lorsque le deuxième piston (1010) se rétracte.

10. Ensemble hydraulique selon la revendication 9, dans lequel le deuxième fluide (1208) comprend le gaz (1044) et un liquide hydraulique et dans lequel un volume de la première portion de la première sous-chambre (1141) augmente et un volume de la deuxième portion de la deuxième sous-chambre (1143) diminue en réponse à l'extension du deuxième piston (1010) de façon à ce que le liquide hydraulique soit forcé de traverser le système d'étanchéité (1165) afin d'exercer une résistance au mouvement du deuxième piston (1010).

11. Ensemble hydraulique selon la revendication 10, dans lequel le liquide hydraulique est conçu pour lubrifier le système d'étanchéité (1165).

12. Ensemble hydraulique selon l'une des revendications 1 à 11, dans lequel le premier fluide (1038) comprend un liquide hydraulique et le deuxième fluide (1208) comprend le gaz (1044) et le liquide hydraulique dans lequel le gaz (1044) est compressible.

13. Ensemble hydraulique selon l'une des revendications 1 à 12, dans lequel le boîtier (1006), le premier piston (1008), le deuxième piston (1010) et le troisième piston (1012) forment un actionneur dans l'ensemble hydraulique et dans lequel l'actionneur est conçu pour avoir une position sélectionnée parmi une position comprimée, une position rétractée et une position complètement étendue.

14. Procédé de commande d'un actionneur, ce procédé comprenant :
la commande de l'actionneur, l'actionneur présentant les caractéristiques selon la revendication 1 et, en outre
la rétraction du deuxième piston (1010) et du premier piston (1008) en réponse à l'application d'une charge au deuxième piston (1010), le gaz (1044) dans la chambre interne (1050) se comprimant lorsque le deuxième piston (1010) se rétracte.

15. Procédé selon la revendication 14, dans lequel l'étape de rétraction du deuxième piston (1010) et du premier piston (1008) en réponse à l'application de la charge sur le deuxième piston (1010) comprend en outre :
la rétraction du deuxième piston (1010) et du premier piston (1008) en réponse à l'application d'une charge au deuxième piston (1010), de façon à ce que l'actionneur passe d'une position complètement étendue à une position comprimée, le premier piston (1008) et le deuxième piston (1010) comprimant le gaz (1044) qui se trouve dans la chambre interne (1050).
